(19) Europäisches Patentamt
European Patent Office
Office européen des brevets

(11) **EP 3 973 222 B1**

(12) **EUROPÄISCHE PATENTSCHRIFT**

(45) Veröffentlichungstag und Bekanntmachung des Hinweises auf die Patenterteilung:
**18.12.2024 Patentblatt 2024/51**

(21) Anmeldenummer: **20730983.2**

(22) Anmeldetag: **20.05.2020**

(51) Internationale Patentklassifikation (IPC):
**F16M 11/04** *(2006.01)* **F16M 11/10** *(2006.01)*
**F16M 11/20** *(2006.01)* **F16M 11/18** *(2006.01)*

(52) Gemeinsame Patentklassifikation (CPC):
**F16M 11/18; F16M 11/046; F16M 11/048;**
**F16M 11/2014;** F16M 2200/041; F16M 2200/063;
F16M 2200/08

(86) Internationale Anmeldenummer:
**PCT/EP2020/064088**

(87) Internationale Veröffentlichungsnummer:
**WO 2020/234360 (26.11.2020 Gazette 2020/48)**

(54) **HALTEVORRICHTUNG FÜR EINE KAMERA**

RETAINING DEVICE FOR A CAMERA

ARRANGEMENT DE MAINTIEN POUR UNE CAMÉRA

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **20.05.2019 DE 102019113301**
**03.04.2020 DE 202020101821 U**

(43) Veröffentlichungstag der Anmeldung:
**30.03.2022 Patentblatt 2022/13**

(73) Patentinhaber: **Cinetica GmbH**
**80637 München (DE)**

(72) Erfinder:
• **LUKAS, Andreas**
**81541 München (DE)**
• **MÜLLER, Matthias**
**81735 München (DE)**
• **RIEPERT, Jan**
**80799 München (DE)**
• **BIEBER, Tojan**
**81541 München (DE)**

(74) Vertreter: **Ege Lee & Roider Patentanwälte**
**Wilhelm-Wagenfeld-Straße 24**
**80807 München (DE)**

(56) Entgegenhaltungen:
**US-A- 2 548 476 US-A- 5 192 963**
**US-A- 5 531 412**

**Beschreibung**

Die Erfindung betrifft eine Halte- und Bewegungsvorrichtung für eine Nutzlast, insbesondere eine Kamera, die einen dynamischen Gewichtsausgleich ermöglicht.

Es gibt vielerlei Kamerahaltevorrichtungen, die bei Filmaufnahmen die Kamera halten und Bewegen. Ein Problem ist, dass bisherige Kamera-Bewegungsvorrichtungen in ihrer Bewegungsfreiheit eingeschränkt sind, so können Kamerakrane die Kamera bspw. nur auf der Mantelfläche einer Kugel bewegen. Andere Kamerakrane bieten zusätzliche Bewegungsfreiheit. Aber hier besteht das Problem, dass das dynamische Gleichgewicht nicht unabhängig von der Stellung des Bewegungsarmes gegeben ist. Insbesondere wenn man beim Schwenken die mittlere Höhenlage der Nutzlast und/oder des Gegengewichts verlässt kann durch unproportionale Eigengewichte ein Ungleichgewicht entstehen. Solche Lösungen bieten ein Gleichgewicht nur in ungefährer mittlerer Stellung, in der die Lage von Kamera und Ausgleichsgewicht ungefähr horizontal ausgerichtet sind. Positionen mit einer größeren Auslenkung der Kamera in der Vertikalen oder Abweichungen in der Nähe des Basispunktes können daher nicht ohne Gleichgewichtsverlust angefahren werden.

Eine solche Aufhängevorrichtung ist beispielsweise in der US 5,192,963 A offenbart, die es einem Bediener ermöglicht, Kamerabewegungen auszuführen, ohne andauernd das Gewicht der Kamera zu halten. Die Vorrichtung umfasst ein Joch, das drehbar an einer mit Rädern versehenen Basis zur Drehung um eine vertikale Achse montiert ist. Ein primärer Hebelarm mit einem ersten und einem zweiten Ende und einem Mittelabschnitt ist schwenkbar an dem Joch angebracht, um einen Drehpunkt zu bilden. Ein sekundärer Arm hat ein erstes Ende, das schwenkbar an dem zweiten Ende des primären Hebelarms befestigt ist, und ein zweites Ende, das eine Halterung für die Kamera enthält. Ein Ausgleichsgewichtsarm hat ein erstes Ende, das schwenkbar an dem ersten Ende des primären Hebelarms befestigt ist. Um das Gleichgewicht zu gewährleisten, umfasst die Vorrichtung einen Kettenantriebsmechanismus, der auf ein Schwenken des sekundären Arms um das zweite Ende des primären Hebelarms in einer ersten Richtung anspricht, um den Ausgleichsgewichtsarm um das erste Ende des primären Hebelarms in einer zweiten Richtung zu schwenken. Darüber hinaus umfasst die Vorrichtung einen Kettenantriebsmechanismus zum Aufrechterhalten des Kamerapegels relativ zu der Basis, wenn der sekundäre Arm um das zweite Ende des primären Hebelarms geschwenkt wird.

Das Problem dieser Anordnung ist, dass kein dynamischer Gewichtsausgleich gegeben ist. Sobald die Kamera eine ungefähre Stellung in mittlerer Höhe verlässt, kann das Ausgleichsgewicht das Kameragewicht nicht mehr mit hinreichender Genauigkeit ausgleichen und es entsteht ein Ungleichgewicht, so dass das Gewicht der Kamera doch vom Bediener unterstützt werden muss.

Die EP 2391571 B1 offenbart einen Gelenkausleger zum Bewegen einer Last, wobei der Ausleger an einer Basis gelagert ist und der Ausleger einen ersten Auslegerarm, der schwenkbar mit der Basis verbunden ist, wobei der erste Auslegerarm als Baskule fungiert und um eine erste Achse schwenkbar ist, und einen zweiten Auslegerarm umfasst, der schwenkbar mit dem ersten Auslegerarm verbunden ist, wobei der zweite Auslegerarm um eine zweite Achse schwenkbar ist, wobei der erste und der zweite Auslegerarm jeweils zwei parallele Rahmenstangen umfassen, wobei jede der Rahmenstangen des ersten Auslegerarms schwenkbar mit der Basis verbunden ist und durch einen Ellbogenabstandhalter an einem der besagten Ellbogenende des ersten Auslegerarms benachbart zum zweiten Auslegerarm voneinander beabstandet sind und durch wenigstens eine mittlere Montageplatte, die schwenkbar mit dem ersten Auslegerarm zwischen dem Ellbogenende und einem gegenüberliegenden distalen Ende verbunden ist, und wobei die Rahmenstangen des ersten Auslegerarms mit den zwei parallelen Rahmenstangen des zweiten Auslegerarms verbunden sind, um einen Parallelogrammverbindungsmechanismus an dem Ellbogenende auszubilden. Ferner umfasst der Gelenkausleger einen Hebelarm, der an seinem unteren Ende schwenkbar mit der mittleren Befestigungsplatte verbunden ist um einen festen Abstand von der mittleren Montageplatte zu haben, eine Verbindungsstange, die den Hebelarm mit dem zweiten Auslegerarm verbindet, ein erstes Ausgleichsgewicht, das an dem distalen Ende des ersten Auslegerarms angeordnet ist und ein zweites Ausgleichsgewicht, das an einem oberen Ende des Hebelarms angeordnet ist. Auch bei dieser Anordnung ist das Gleichgewicht nur in einer ungefähren Mittellage der Kamera gegeben. Ein dynamisches Gleichgewicht wird nicht erreicht.

Weiterer technologischer Hintergrund kann der US 2 548 476 A und der US 5 531 412 A entnommen werden.

Aufgabe der vorliegenden Erfindung ist es, eine einfach zu benutzende Haltevorrichtung mit unkomplizierter Konstruktion bereitzustellen, die einen dynamischen und präzisen Gewichtsausgleich für unterschiedliche Nutzlasten, wie Kameras, ermöglicht. Insbesondere ist es die Aufgabe der vorliegenden Verbindung eine Halte- und Bewegungsvorrichtung bereitzustellen, die ein nahezu perfektes dynamisches Gleichgewicht ermöglicht. Unter einem dynamischen Gleichgewicht kann ein Gleichgewicht verstanden werden, das unabhängig von der Stellung der einzelnen Schwenkarme und während der Bewegung, auch ohne Nutzlast, besteht. So kann ein freies Positionieren der Nutzlast an jedem Ort des erreichbaren Raumvolumens möglich sein, ohne dass die Nutzlast durch den Bediener gestützt werden müsste. Diese Aufgabe wird durch eine Halte- und Bewegungsvorrichtung nach Anspruch 1, 2 oder 3 gelöst. Weitere, die Erfindung ausgestaltende Merkmale sind in den Unteransprüchen enthalten.

Gemäß einem ersten Aspekt umfasst die erfindungsgemäße Halte- und Bewegungsvorrichtung für eine Nutzlast, insbesondere eine Kamera, einen Stützfuß, einen Lagerarm, der schwenkbar an dem Stützfuß befestigt ist, so dass ein nutzlastseitiger Abschnitt (z.B. ein nutzlastseitiger Endbereich) und ein gewichtseitiger Abschnitt (z.B. ein gewichtseitiger Endbereich) ausgebildet sind (beispielsweise über die Befestigung hervorstehen), einen ersten Schwenkarm, der nutzlastseitig mit dem nutzlastseitigen Abschnittdes Lagerarms verbunden ist und an dem eine Nutzlast, insbesondere eine Kamera, und/oder eine Halteeinrichtung für eine Nutzlast anbringbar oder angebracht ist, und einen zweiten Schwenkarm, der gewichtseitig mit dem gewichtseitigen Abschnitt des Lagerarms verbunden ist und an dem wenigstens ein Ausgleichsgewicht anbringbar oder angebracht ist, wobei der Lagerarm, der erste Schwenkarm und der zweite Schwenkarm derart miteinander verbunden sind, dass die Ausrichtung des ersten und des zweiten Schwenkarms in jeder Stellung zueinander im Wesentlichen parallel sind, wobei der Schwerpunkt der Gewichtsseite, der Schwerpunkt der Nutzlastseite und der Befestigungspunkt des Lagerarms am Stützfuß im Wesentlichen auf einer geraden Linie liegen.

Gemäß einem zweiten Aspekt umfasst die erfindungsgemäße Halte- und Bewegungsvorrichtung für eine Nutzlast einen Stützfuß, einen Lagerarm, der schwenkbar an dem Stützfuß befestigt ist, so dass ein nutzlastseitiger Abschnitt und ein gewichtseitiger Abschnitt ausgebildet sind, einen ersten Schwenkarm, der nutzlastseitig mit dem nutzlastseitigen Abschnitt des Lagerarms verbunden ist und an dem eine Nutzlast und/oder eine Halteeinrichtung für eine Nutzlast anbringbar oder angebracht ist, und einen zweiten Schwenkarm, der gewichtseitig mit dem gewichtseitigen Abschnitt des Lagerarms verbunden ist und an dem wenigstens ein Ausgleichsgewicht anbringbar oder angebracht ist, wobei der Lagerarm, der erste Schwenkarm und der zweite Schwenkarm derart miteinander verbunden sind, dass die Ausrichtung des ersten und des zweiten Schwenkarms in jeder Stellung zueinander im Wesentlichen parallel sind, wobei das Verhältnis des Abstands vom Verbindungspunkt des ersten Schwenkarms am Lagerarm zum Befestigungspunkt der Nutzlast oder der Halteeinrichtung am ersten Schwenkarm zu dem Abstand vom Befestigungspunkt des Lagerarms am Stützfuß zum Verbindungspunkt des ersten Schwenkarms am Lagerarm im Wesentlichen gleich dem Verhältnis des Abstands vom Verbindungspunkt des zweiten Schwenkarms am Lagerarm zum Schwerpunkt und/oder Anbringungspunkt des Ausgleichsgewichts am zweiten Schwenkarm zu dem Abstand vom Befestigungspunkt des Lagerarms am Stützfuß zum Verbindungspunkt des zweiten Schwenkarms am Lagerarm ist.

Gemäß einem dritten Aspekt umfasst die erfindungsgemäße Halte- und Bewegungsvorrichtung für eine Nutzlast einen Stützfuß, einen Lagerarm, der schwenkbar an dem Stützfuß befestigt ist, so dass ein nutzlastseitiger Abschnitt und ein gewichtseitiger Abschnitt ausgebildet sind, einen ersten Schwenkarm, der nutzlastseitig mit dem nutzlastseitigen Abschnitt des Lagerarms verbunden ist und an dem eine Nutzlast und/oder eine Halteeinrichtung für eine Nutzlast anbringbar oder angebracht ist, und einen zweiten Schwenkarm, der gewichtseitig mit dem gewichtseitigen Abschnitt des Lagerarms verbunden ist und an dem wenigstens ein Ausgleichsgewicht anbringbar oder angebracht ist, wobei der Lagerarm, der erste Schwenkarm und der zweite Schwenkarm derart miteinander verbunden sind, dass die Ausrichtung des ersten und des zweiten Schwenkarms in jeder Stellung zueinander im Wesentlichen parallel sind, wobei der gewichtseitige zweite Schwenkarm und/oder der gewichtseitige Lagerarmabschnitt derart ausgebildet sind, dass das Gewicht des nutzlastseitigen ersten Schwenkarms und/oder des nutzlastseitigen Lagerarmabschnitts in jeder Stellung der Halte- und Bewegungsvorrichtung ausgeglichen ist.

Das Verhältnis des Abstands vom Verbindungspunkt des ersten Schwenkarms am Lagerarm zum Befestigungspunkt der Nutzlast oder der Halteeinrichtung am ersten Schwenkarm zu dem Abstand vom Befestigungspunkt des Lagerarms am Stützfuß zum Verbindungspunkt des ersten Schwenkarms am Lagerarm kann im Wesentlichen gleich dem Verhältnis des Abstands vom Verbindungspunkt des zweiten Schwenkarms am Lagerarm zum Schwerpunkt und/oder Anbringungspunkt des Ausgleichsgewichts am zweiten Schwenkarm zu dem Abstand vom Befestigungspunkt des Lagerarms am Stützfuß zum Verbindungspunkt des zweiten Schwenkarms am Lagerarm sein.

Der gewichtseitige zweite Schwenkarm und/oder der gewichtseitige Lagerarmabschnitt kann derart ausgebildet sein, dass das Gewicht des nutzlastseitigen ersten Schwenkarms und/oder des nutzlastseitigen Lagerarmabschnitts, insbesondere in jeder Stellung der Halte- und Bewegungsvorrichtung, ausgeglichen ist.

Der Schwerpunkt (z.B. Gesamtschwerpunkt) der Gewichtsseite, der Schwerpunkt (z.B. Gesamtschwerpunkt) der Nutzlastseite und der Befestigungspunkt des Lagerarms am Stützfuß kann im Wesentlichen auf einer geraden Linie liegen.

Die Ausrichtung kann im Allgemeinen durch eine, insbesondere gedachte und/oder gerade, Verbindungslinie zwischen zwei Punkten, wie Gelenkachsen oder Verbindungspunkten, des jeweiligen Elements definiert sein. Die Ausrichtung kann durch die Mittelachse oder Längsachse des jeweiligen Elements definiert sein. Alle geometrischen Bezüge, Ausrichtungen, Abstände, Längen und/oder Positionen können in einer zweidimensionalen Ansicht, wie Seitenanaischt, der Halte- und Bewegungsvorrichtung zu sehen oder definiert sein. Die Ausrichtung des ersten Schwenkarms kann durch eine, insbesondere gerade, Verbindungslinie zwischen dem Verbindungspunkt des ersten Schwenkarms am Lagerarm, insbesondere am nutzlastseitigen Abschnitt, und dem Befestigungspunkt der Nutzlast oder der Halteeinrichtung am ersten Schwenkarm definiert sein. Die Ausrichtung des nutzlastseitigen Abschnitts des Lagerarms kann durch eine, insbesondere gerade, Verbindungslinie zwischen dem Befestigungspunkt des Lagerarms, insbesondere des nutzlastseitigen Abschnitts, am Stützfuß und dem Verbindungspunkt des ersten Schwenkarms am Lagerarm, insbesondere am nutzlastseitigen Abschnitt, definiert sein. Die Ausrichtung des zweiten Schwenkarms kann durch eine, insbesondere gerade, Verbindungslinie zwischen dem Verbindungspunkt des zweiten Schwenkarms am Lagerarm, insbesondere am gewichtsseitigen Abschnitt, und dem Schwerpunkt und/oder Anbringungspunkt des Ausgleichsgewichts, insbesondere des Ausgleichgewichts für die Nutzlast, am zweiten Schwenkarm definiert sein. Die Ausrichtung des gewichtsseitigen Abschnitts des Lagerarms kann durch eine, insbesondere gerade, Verbindungslinie zwischen dem Befestigungspunkt des Lagerarms, insbesondere des gewichtsseitigen Abschnitts, am Stützfuß und dem Verbindungspunkt des zweiten Schwenkarms am Lagerarm, insbesondere am gewichtsseitigen Abschnitt, definiert sein. Die Punkte, Verbindungspunkte, Befestigungspunkte und/oder Anbringungspunkte können durch Gelenkpunkte und/oder Drehachsen definiert sein. Die Drehachsen können senkrecht zu einer zweidimensionalen Ansicht, wie Seitenansicht, der Halte- und Bewegungsvorrichtung sein. Der Lagerarm, der erste Schwenkarm und/oder der zweite Schwenkarm können geometrisch und/oder konstruktiv unterschiedlich ausgebildet sein. Die Halte- und Bewegungsvorrichtung kann senkrecht angeordnet sein. Der Stützfuß kann senkrecht angeordnet sein. Der Stützfuß kann im Boden oder in der Decke verankert sein. Der Stützfuß kann auf einer Bewegungsvorrichtung, beispielsweise ein Rollwagen oder dergleichen, angeordnet sein. Der Stützfuß kann auf einem Stativ, wie Kamerastativ, angeordnet sein. Der Lagerarm, der erste Schwenkarm und der zweite Schwenkarm können im Wesentlichen eine Z-Form definieren und/oder ausbilden. Die gebildete Z-Form kann im Wesentlichen senkrecht ausgerichtet oder orientiert sein. Die gebildete Z-Form kann sich im Wesentlichen in einer senkrechten Ebene erstrecken oder in dieser ausgerichtet sein.

Der Abstand vom Verbindungspunkt des ersten Schwenkarms am Lagerarm zum Befestigungspunkt der Nutzlast oder der Halteeinrichtung am ersten Schwenkarm und der Abstand vom Befestigungspunkt des Lagerarms am Stützfuß zum Verbindungspunkt des ersten Schwenkarms am Lagerarm können im Wesentlichen gleich lang sein. Der erste Schwenkarm und der nutzlastseitige Abschnitt des Lagerarms können im Wesentlichen gleich lang sein. Der Abstand vom Verbindungspunkt des ersten Schwenkarms am Lagerarm zum Befestigungspunkt der Nutzlast oder der Halteeinrichtung am ersten Schwenkarm kann größer oder kleiner als der Abstand vom Befestigungspunkt des Lagerarms am Stützfuß zum Verbindungspunkt des ersten Schwenkarms am Lagerarm sein. Die Länge des ersten Schwenkarms kann größer oder kleiner als die Länge des nutzlastseitigen Abschnitts des Lagerarms sein.

Der Abstand vom Verbindungspunkt des zweiten Schwenkarms am Lagerarm zum Schwerpunkt und/oder Anbringungspunkt des Ausgleichsgewichts am zweiten Schwenkarm und der Abstand vom Befestigungspunkt des Lagerarms am Stützfuß zum Verbindungspunkt des zweiten Schwenkarms am Lagerarm können im Wesentlichen gleich lang sein. Der zweite Schwenkarm und der gewichtseitige Abschnitt des Lagerarms können im Wesentlichen gleich lang sein. Der Abstand vom Verbindungspunkt des zweiten Schwenkarms am Lagerarm zum Schwerpunkt und/oder Anbringungspunkt des Ausgleichsgewichts am zweiten Schwenkarm kann größer oder kleiner als der Abstand vom Befestigungspunkt des Lagerarms am Stützfuß zum Verbindungspunkt des zweiten Schwenkarms (40) am Lagerarm (20) sein. Die Länge des zweiten Schwenkarms kann größer oder kleiner als die Länge des gewichtseitigen Abschnitts des Lagerarms sein.

Die Nutzlast kann eine Kamera, z.B. für Foto- und/oder Videoaufnahmen sein. Bei der Halte- und Bewegungsvorrichtung kann es sich um eine Kamerahalte- und Kamerabewegungsvorrichtung handeln. Die Ausrichtung des ersten und die Ausrichtung des zweiten Schwenkarms können in jeder Stellung zueinander parallel sein. Der Gesamtschwerpunkt der Gewichtsseite, der Gesamtschwerpunkt der Nutzlastseite und der Befestigungspunkt des Lagerarms am Stützfuß kann, vorzugsweise in jeder Stellung der Halte- und Bewegungsvorrichtung, im Wesentlichen auf einer geraden Linie liegen. Generell kann der Schwerpunkt oder Gesamtschwerpunkt sowohl das Eigengewicht des jeweiligen Schwenkarms, das Eigengewicht des jeweiligen nutzlast- oder gewichtsseitigen Abschnitts des Lagerarms, das jeweilige Ausgleichsgewicht oder Ausgleichsgewichte, das Eigengewicht der Halteeinrichtung für die Nutzlast und/oder die Nutzlast (z.B. Kamera) umfassen oder dadurch gebildet oder definiert sein. Der Schwerpunkt oder Gesamtschwerpunkt der Gewichtsseite kann das Eigengewicht des gewichtseitigen zweiten Schwenkarms, das Eigengewicht des gewichtseitigen Abschnitts des Lagerarms und/oder wenigstens ein gewichtseitiges Ausgleichsgewicht umfassen oder dadurch gebildet oder definiert sein. Der Schwerpunkt oder Gesamtschwerpunkt der Nutzlastseite kann das Eigengewicht des nutzlastseitigen ersten Schwenkarms, das Eigengewicht des nutzlastseitigen Abschnitts des Lagerarms, das Eigengewicht der Halteeinrichtung für die Nutzlast und/oder das Eigengewicht der Nutzlast umfassen oder dadurch gebildet oder definiert sein. Vorzugsweise kann die Nutzlast ihren Schwerpunkt, wie Eigenschwerpunkt, im Befestigungspunkt der Nutzlast am ersten Schwenkarm haben. Der Schwerpunkt oder Eigenschwerpunkt der Nutzlast kann, auch bei einer vertikalen und/oder horizontalen Auslenkung oder Anbringung der Nutzlast, im Befestigungspunkt der Nutzlast am ersten Schwenkarm gebildet, angeordnet, angenommen und/oder definiert sein. Dadurch, dass die Schwerpunkte auf einer geraden Linie liegen und/oder die Eigenlasten der Konstruktion berücksichtigt werden, wird sichergestellt, dass ein nahezu perfektes dynamisches Gleichgewicht der Haltevorrichtung bereitgestellt ist, also ein Gleichgewicht das unabhängig von der Stellung der einzelnen Schwenkarme und während der Bewegung der Haltevorrichtung besteht. Ein optimales Gleichgewicht kann insbesondere erreicht werden, wenn die Eigenlasten der Halte- und Bewegungsvorrichtung und/oder der Nutzlast, beispielsweise mit einem Ausgleichsgewicht oder mit Ausgleichsgewichten ausgleichen ist/sind. So wird ein freies Positionieren der Nutzlast/Kamera an jedem Ort des erreichbaren Raumvolumens möglich, ohne dass die Nutzlast/Kamera durch den Bediener gestützt werden müsste. Auch Extrempositionen wie weit nach oben, nach außen und nach unten sind möglich. Die Gewichtsseite ist die Seite, die in Bezug auf den Verbindungspunkt des Lagerarms mit dem Stützfuß auf der Seite des Ausgleichsgewichts angeordnet ist. Die Nutzlastseite ist die Seite, die entsprechend auf der Seite der Nutzlast angeordnet ist. Die Nutzlast ist insbesondere eine Kamera, aber auch eine Leuchte, ein Fotoapparat oder ähnliche Vorrichtungen können als Nutzlast verwendet werden. Eine Nutzlast kann auch ein medizinisches Gerät oder Instrument sein.

Der zweite Schwenkarm kann ferner eine Halteeinrichtung für ein Ausgleichsgewicht für die Nutzlast/Kamera aufweisen. Der zweite Schwenkarm kann eine Halteeinrichtung für ein Ausgleichsgewicht für den nutzlastseitigen ersten Schwenkarm und/oder den nutzlastseitigen Lagerarmabschnitt aufweisen. Der zweite Schwenkarm kann zumindest ein in Abhängigkeit der Nutzlast/Kamera vorbestimmtes Ausgleichsgewicht aufweisen. Das in Abhängigkeit der Nutzlast/Kamera vorbestimmte Ausgleichsgewicht kann an einer entlang dem zweiten Schwenkarm variablen Position befestigbar sein. Der zweite Schwenkarm kann zumindest ein in Abhängigkeit des Eigengewichts des nutzlastseitigen ersten Schwenkarms und/oder des nutzlastseitigen Lagerarmabschnitts vorbestimmtes Ausgleichsgewicht aufweisen. Ein Ausgleichsgewicht kann durch die Bauweise des Lagerarms, insbesondere des gewichtsseitigen Abschnitts des Lagerarms, und/oder des zweiten Schwenkarms gebildet sein. Ein anzubringendes Ausgleichgewicht kann durch die Bauweise des entsprechenden Arms oder Abschnitts ersetzt werden, die in Gewicht und/oder Lage des eigenen Schwerpunkts der Summe und/oder Resultierenden des Bauteil-Eigengewichts mit seinem Schwerpunkt und dem errechneten bzw. vorbestimmten Ausgleichgewicht mit seinem Schwerpunkt entspricht. Durch den Gewichtsausgleich, der entweder durch solch eine vorgegebene konstruktive Ausgestaltung der Lager- und Schwenkarme zusammen mit dem variablen Kamera/Nutzlastausgleichgewicht oder der durch das bewegliche Gewicht vorgenommen wird, kann das dynamische Gleichgewicht in einfacher Weise realisiert werden. Der Lagerarm und/oder die Schwenkarme können mehrteilig, beispielsweise zweiteilig, ausgebildet sein, können aber in sich bewegungs- und drehfest konstruiert sein, so dass sich der jeweilige Arm/Element immer als Ganzes bewegt.

Vorzugsweise kann der Stützfuß in Bezug auf den jeweiligen Schwenkarm an einer ersten Längsseite (z.B. einem ersten Ende) des, insbesondere mehrzeiligen, wie zweiteiligen, Lagerarms befestigt sein. Der erste und der zweite Schwenkarm können an der jeweils gegenüberliegenden Längsseite (z.B. an den gegenüberliegenden Enden) des Lagerarms befestigt sein. Dadurch kann vermieden werden, dass sich der Bewegungsraum der Schwenkarme mit dem Stützfuß überschneidet. Dies kann insbesondere dann der Fall sein, wenn der Lagerarm aus mehreren Elementen, beispielsweise zwei Elementen, ausgebildet ist und der gewichtseitige Abschnitt des Laberarms bezüglich des Stützfußes auf der gegenüberliegenden Seite ausgebildet ist, als der nutzlastseitige Abschnitt des Lagerarms. Dann können sich auch die beiden Schwenkarme nicht gegenseitig in der Bewegung stören.

Die Ausrichtung der Halteeinrichtung für die Nutzlast und/oder der Halteeinrichtung für das Ausgleichsgewicht für die Nutzlast kann derart gesteuert sein kann, dass diese die Bewegung der Schwenkarme ausgleicht. Dies kann insbesondere über eine eigene mechanische, hydraulische oder elektromechanische Steuerung geschehen. Dadurch können unruhige Aufnahmen bei Kameraschwenks vermieden werden. Ferner kann die Nutzlast immer die gleiche Ausrichtung unabhängig von der Rotation/Verschwenkung der Schwenkarme behalten. Das kann beispielsweise bei der Führung der Nutzlast, z.B. Kameraführung, und bei der Befestigung und Nutzung der Nutzlast oder verschiedener Nutzlasten hilfreich sein.

Der Schwerpunkt und/oder Haltepunkt/Aufhängepunkt für die Nutzlast/Kamera und/oder für die Halteeinrichtung für die Nutzlast/Kamera, der Schwerpunkt und/oder Haltepunkt für das Ausgleichsgewicht für die Nutzlast/Kamera und der Befestigungspunkt des Lagerarms am Stützfuß können vorzugsweise in jeder Stellung der Halte- und Bewegungsvorrichtung, im Wesentlichen auf einer geraden Linie liegen oder angeordnet sein. Der Schwerpunkt des ersten Schwenkarms, der Schwerpunkt des zweiten Schwenkarms und der Verbindungspunkt des Lagerarms am Stützfuß können, vorzugsweise in jeder Stellung der Halte- und Bewegungsvorrichtung, im Wesentlichen auf einer geraden Linie liegen. Dadurch kann eine einfache Möglichkeit bereitgestellt werden, dass die gewicht- und nutzlastseitige Gewichtsverteilung äußerst präzise durchgeführt wird.

Die Nutzlast/Kamera kann bevorzugt an einem dafür vorgesehenen seitlichen, horizontalen und/oder vertikalen Ausleger befestigbar sein. Die Halteeinrichtung für die Nutzlast/Kamera kann als seitlicher, horizontaler und/oder vertikaler Ausleger ausgebildet sein. An einem seitlichen und/oder horizontalen Ausleger neben dem Aufhängepunkt ist es unwahrscheinlicher, dass die Nutzlast/Kamera mit anderen Bauteilen der Halte- und Bewegungsvorrichtrung zusammenstoßen kann.

Die Schwenkarme und/oder der Lagerarm können vorzugsweise über Kettenzüge, Riemen, Seilzüge, Elektromotoren und/oder hydraulische Drehantriebe miteinander bewegungsrelativ verbunden sein. So kann eine gleichzeitige und zueinander ausgerichtete Bewegung der einzelnen Elemente sichergestellt werden.

Nachfolgend werden Ausführungsbeispiele der Erfindung unter Bezugnahme auf Figuren näher beschrieben, dabei zeigen schematisch und beispielhaft:

Fig. 1 zeigt eine isometrische Darstellung einer Halte- und Bewegungsvorrichtung gemäß der vorliegenden Erfindung;

Fig. 2 zeigt die Halte- und Bewegungsvorrichtung aus Figur 1 in einer Draufsicht;

Fign. 3a-c zeigen die Halte- und Bewegungsvorrichtung aus Figur 1 in verschiedenen Stellungen in einer Seitenansicht;

Fign. 4a-c zeigen weitere Ausführungsformen der Halte- und Bewegungsvorrichtung gemäß der vorliegenden Erfindung;

Fig. 5 zeigt eine vergrößerte Ansicht auf eine mechanische Drehverbindung des Lagerarms und der Schwenkarme; und

Fig. 6a-c zeigen schematische Darstellungen von unterschiedlichen Ausführungsformen der Halte- und Bewegungsvorrichtung gemäß der vorliegenden Erfindung mit speziellen Relativmaßen.

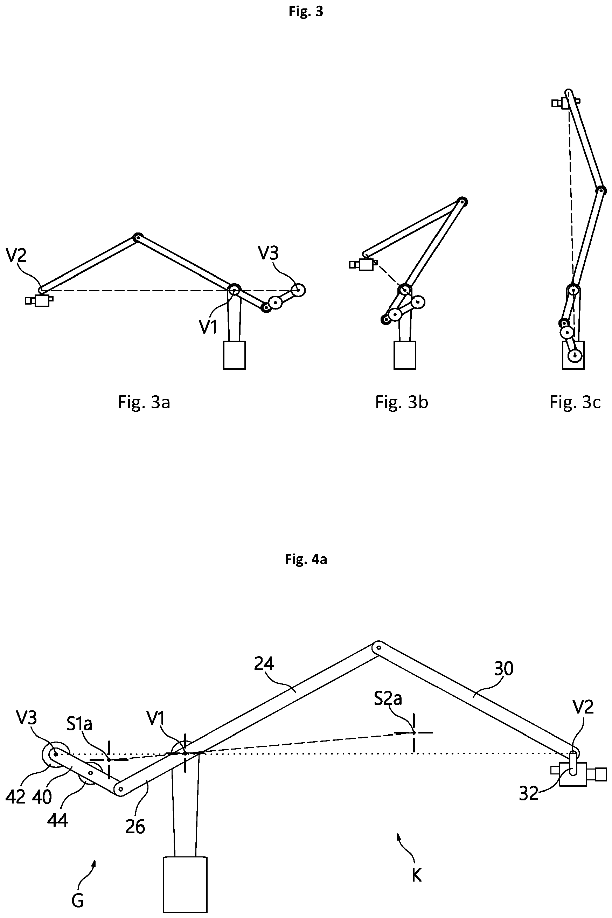

Alle geometrischen Bezüge, Ausrichtungen, Abstände, Längen und/oder Positionen können in einer zweidimensionalen Ansicht der Halte- und Bewegungsvorrichtung zu sehen oder definiert sein. In den Figuren 3a bis 4c und 6a bis 6c ist dies die zweidimensionale Seitenansicht der Halte- und Bewegungsvorrichtung, die der Zeichnungsebene entspricht. Die Drehachsen aller Gelenkpunkte verlaufen hier immer senkrecht zu der zweidimensionalen Zeichenebene.

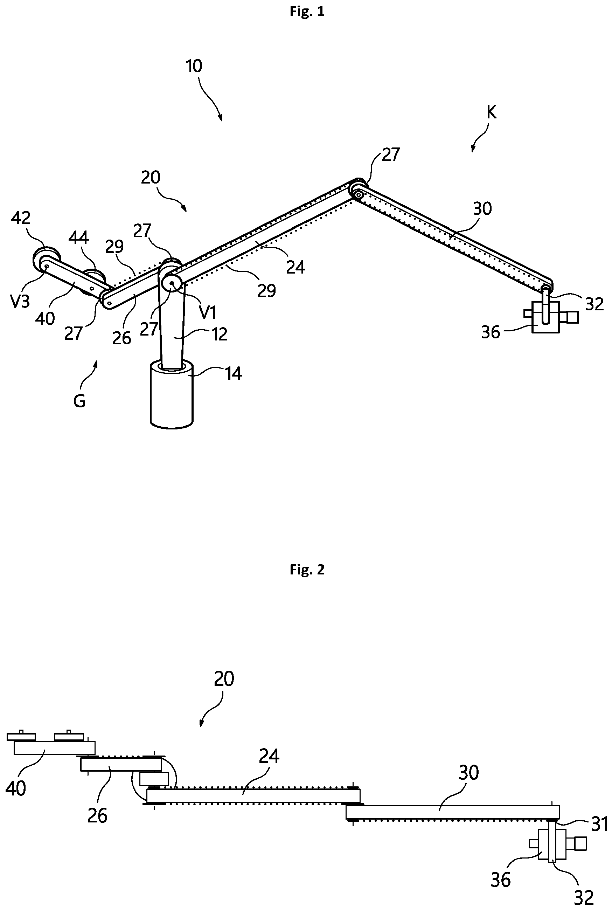

Figuren 1 bis 3c zeigt eine isometrische Darstellung einer ersten Ausführungsform einer Halte- und Bewegungsvorrichtung 10 der vorliegenden Erfindung. Die Halte- und Bewegungsvorrichtung 10 umfasst generell einen Stützfuß 12, einen Lagerarm 20, einen ersten nutzlastseitigen Schwenkarm 30 und einen zweiten gewichtseitigen Schwenkarm 40. In der folgenden Beschreibung wird als Nutzlast beispielhaft eine Kamera verwendet.

Der Stützfuß 12 ist hier stangenartig ausgebildet dargestellt. Vorzugsweise ist der Stützfuß 12 mobil, d.h. er kann angehoben und/oder umgestellt werden, so dass die Position der Halte- und Bewegungsvorrichtung 10 veränderbar ist. Der Sützfuß 12 kann hierzu Rollen aufweisen. Die Standfläche 14 ist in den Figuren als Kegel oder Zylinder schematisiert. Generell sind aber auch 3 oder mehr Standbeine verwendbar. Es ist aber auch ein fixierter Stützfuß mit der vorliegenden Erfindung verwendbar, der bspw. mit dem Boden über einen Flansch verschraubt ist. An seinem oberen Ende ist der Stützfuß 12 an einem Verbindungspunkt V1 mit dem Lagerarm 20 verbunden. Der Verbindungspunkt des Lagerarms 20 mit dem Stützfuß 12 ist vorzugsweise drehbar gelagert, so dass sich der Lagerarm 20 um den Stützfuß 12 in einer Ebene drehen kann, die senkrecht zur Längsachse des Stützfußes 12 liegt, und/oder in einer Ebene drehen kann, die parallel zur Längsachse des Stützfußes 12 liegt und/oder in der die Längsachse des Stützfußes 12 liegt.

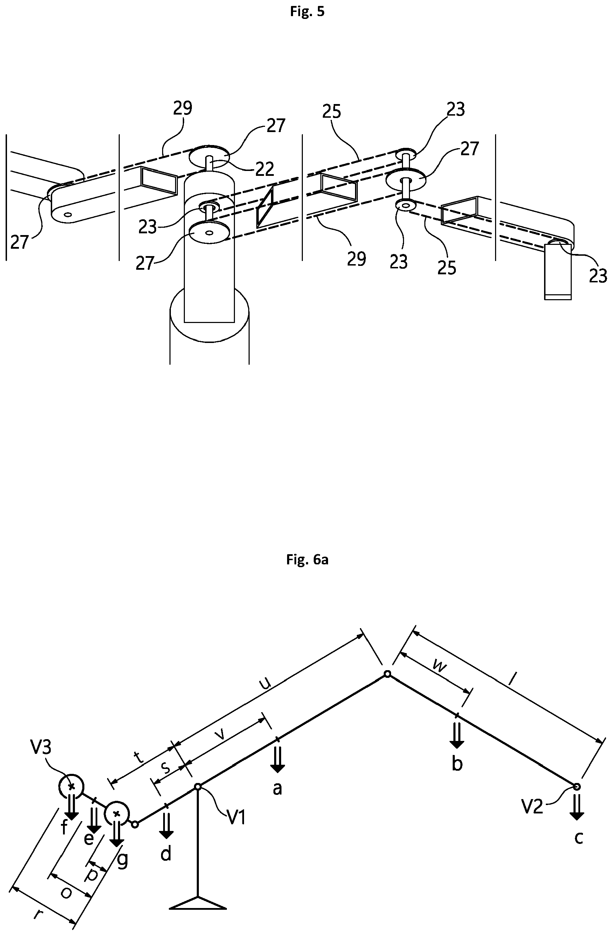

Der Verbindungspunkt V1 des Lagerarms 20 mit dem Stützfuß 12 teilt den Lagerarm 20 in zwei Bereiche: Einen kameraseitigen Bereich K und einem gewichtseitigem Bereich G. Der Lagerarm 20 kann einstückig (d.h., aus nur einem Stück hergestellt) ausgebildet und/oder nur auf einer Seite des Stützfußes 12 angeordnet sein. In der gezeigten Ausführungsform, ist der Lagerarm 20 mehrteilig, insbesondere zweiteilig, ausgebildet. Im Bereich K und im Bereich G ist jeweils ein eigener Abschnitt/Element 24, 26 des Lagerarms 20 vorgesehen, die durch einen Querstab 22 miteinander verbunden sind (siehe Figur 5). Die Elemente 24, 26 sind jedoch bewegungsfest miteinander verbunden. Der Stützfuß 12 lagert den Lagerarm 20 derart am Querstab 22, dass das kameraseitige Element/Abschnitt 24 in Bezug auf den Stützfuß 12 auf der gegenüberliegenden Seite angeordnet ist, als das gewichtseitige Element/Abschnitt 26. Auf diese Weise können sich die Schwenkarme 30, 40 nicht gegenseitig behindern, da sie auf unterschiedlichen Seiten des Stützfußes 12 angeordnet sind. Es ist allerdings von Vorteil, wenn nur die Schwenkarme 30, 40 auf der dem Stützfuß 12 gegenüberliegenden Längsseite des Lagerarms 20 vorgesehen sind. So kann zumindest eine Behinderung der Bewegung der Schwenkarme 30, 40 durch den Stützfuß 12 vermieden werden.

An den beiden Enden des Lagerarms 20 sind die Schwenkarme 30, 40 befestigt. Die Schwenkarme 30, 40 sind jeweils mit einem ihrer Enden drehbar am jeweiligen Ende des Lagerarms 20 angebracht. Der kameraseitige erste Schwenkarm 30 weist an seinem anderen Ende eine Kamerahalteeinrichtung 32 an einem Aufhängungspunkt 31 bzw. V2 auf, mittels der eine Kamera 36 an der Halte- und Bewegungsvorrichtung 10 befestigt wird. Die Kamerahalteeinrichtung 32 erstreckt sich bevorzugt seitlich am Endbereich des Schwenkarms 30 wie in Figur 2 dargestellt, so dass die Kamera 36 (z.B. in einer Draufsicht) neben dem Schwenkarm 30 angeordnet ist. Die Kamera 36 kann auch unter (siehe Figur 1) oder sogar direkt unter dem Aufhängungspunkt 31 angebracht sein.

Der zweite Schwenkarm 40 ist gewichtsseitig angeordnet. Wie in den Figuren 4a- 4c zu erkennen ist, gibt es unterschiedliche Ausführungsformen für den zweiten Schwenkarm 40 und für den gewichtsseitigen Teil 26 des Lagerarms 20 die später noch detaillierter beschrieben werden. Es ist wichtig, dass der erste und zweite Schwenkarm 30, 40 zueinander parallel gehalten werden. Dies wird durch eine Parallelmechanik bewerkstelligt, beispielsweise ein Kettenzug, ein Seilzug oder durch Zahnriemen. In den Figuren 1 und 5 sind Räder 27 und Kettenzug/Riemen 29 schematisch dargestellt. Bei einer Bewegung der Kamera 36 nach vorne, hinten, oben oder unten streckt sich der erste Schwenkarm 30 in die gewünschte Richtung und überträgt diese Bewegung auf den zweiten Schwenkarm 40, der sich dann gleichzeitig automatisch entsprechend bewegt, so dass die gesamte Halte- und Bewegungsvorrichtung 10 inklusive Kamera 36 weiter im Gleichgewicht bleibt. Ebenso kann auch die Ausrichtung der Kamera 36 in dieser Weise festgelegt werden. Dieser Ausgleich kann auch durch andere Mechanismen ausgeführt werden, beispielsweise durch das Bereitstellen einer Vielzahl von Elektromotoren statt der Räder 27, die gemeinsam gesteuert werden, oder durch eine Hydraulikanlage, bei der Hydraulikantriebe miteinander verbunden sind und die Bewegung analog zu den Kettenantrieben übertragen. Es ist ebenfalls möglich, dass der Lagerarm 20 und die Schwenkarme 30, 40 durch ein paralleles Stangengetriebe ausgebildet werden, die deren Parallelität absichern. Figur 5 zeigt eine vergrößerte schematische Darstellung der Parallelmechanik, mit der die Schwenkarme in Abhängigkeit voneinander bewegt werden können. Die Kamerahalteeinrichtung 32 ist vorzugsweise derart gesteuert, dass sie die Bewegung der Schwenkarme 30, 40 und des Lagerarms 20 ausgleicht. Dieser Ausgleich geschieht insbesondere über eine eigene mechanische, hydraulische oder elektromechanische Steuerung analog zu den Systemen, die für die Parallelmechanik der Schwenkarme verwendet werden. In Figur 5 sind dafür kleine Räder 23 und Ketten/Riemen 25 dargestellt. Diese Parallelmechanik ist insbesondere mit dem Stützfuß 12 verbunden. In der gezeigten Ausführung sind die Verbindungswellen der Parallelmechanik der Schwenkarme und die Mechanik für den Kameraausgleich ineinander angeordnet und zueinander verdrehbar ausgestaltet. So kann die Kamera 36 dann auch während der Bewegung in einer vorbestimmten Ausrichtung gehalten werden.

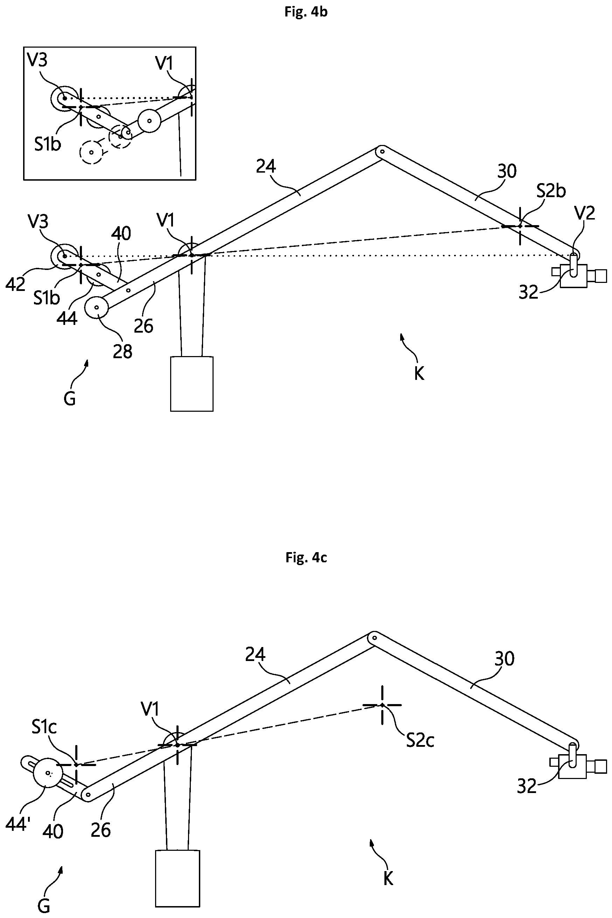

In den Figuren 4a, 4b und 4c sind drei Ausführungsformen der Halte- und Bewegungsvorrichtung gemäß der vorliegenden Erfindung dargestellt. In Figur 4a ist eine Ausführungsform gezeigt, bei der der zweite Schwenkarm 40 angepasst ist um das dynamische Gleichgewicht bereitzustellen. Hier wird durch ein Zusatzgewicht am zweiten Schwenkarm 40 ein Ausgleichsgewicht 44 für die Halte- und Bewegungsvorrichtung 10 erreicht, so dass der Gesamtschwerpunkt S1a der Gewichtsseite G der Halte- und Bewegungsvorrichtung 10, der Verbindungspunkt V1 von Lagerarm 20 und Stützfuß 12 und der Gesamtschwerpunkt S2a der Kameraseite in jeder Stellung der Halte- und Bewegungsvorrichtung 10 im Wesentlichen auf einer geraden Linie liegen (siehe gestrichelte Linie in Figur 4a). Das Ausgleichsgewicht 44 dient zum Ausgleich der Konstruktion, insbesondere des Eigengewichts des kameraseitigen Lagerarmabschnitts 24, des ersten Schwenkarms 30 und der Kamerahalteeinrichtung 32. Der Gesamtschwerpunkt S1a der Gewichtsseite G ergibt sich hier aus dem Ausgleichsgewicht 44, dem Eigengewicht des zweiten Schwenkarms 40 und dem Eigengewicht des gewichtsseitigen Lagerarmabschnitts 26. Der Gesamtschwerpunkt S2a der Kameraseite K ergibt sich aus dem Eigengewicht der Kamerahalteeinrichtung 32, dem Eigengewicht des ersten Schwenkarms 30 und dem Eigengewicht des kameraseitigen Lagerarmabschnitts 24. Das Ausgleichsgewicht 42 dient dann dazu, das Gewicht der Kamera 36 auszugleichen. Der Gesamtschwerpunkt S1a der Gewichtsseite G kann zusätzlich auch das Ausgleichsgewicht 42 umfassen. Der Gesamtschwerpunkt S2a der Kameraseite K kann zusätzlich auch das Eigengewicht der Kamera 36 umfassen. Die Gesamtschwerpunkte S1a und S2a verändern dann ihre Lage, bleiben aber wieder in jeder Position der Halte- und Bewegungsvorrichtung 10 im Wesentlichen auf einer geraden Linie. Ferner weist der zweite Schwenkarm 40 noch eine Halteeinrichtung für das Ausgleichsgewicht 42 für die Kamera 36 auf. In dieser Ausführungsform, liegen der Haltepunkt V3 für das Ausgleichsgewicht 42, der Verbindungspunkt V1 des Lagerarms 20 und der Haltepunkt V2 der Kamerahalteeinrichtung 32 ebenfalls auf einer im Wesentlichen geraden Linie (siehe gepunktete Linie in Figur 4a). Dies ist in jeder Stellung der Halte- und Bewegungseinrichtung 10 der Fall. Das Ausgleichsgewicht 44 kann auch in den Schwenkarm 40 konstruktiv integriert werden, so dass Schwenkarm 40 und das Ausgleichsgewicht 44 einstückig (beispielsweise aus einem Stück hergestellt oder miteinander verschweißt) ausgeführt sind. Die Figuren 3a, 3b und 3c zeigen die Halte- und Bewegungsvorrichtung 10 in verschiedenen extremen Stellungen, in denen das Gleichgewicht des Gesamtsystems immer noch gewahrt bleibt. Im Übrigen wird ergänzend insbesondere auf Figuren. 1 bis 3 und die zugehörige Beschreibung verwiesen.

Die in Figur 4b dargestellte Ausführungsform ist eine speziellere Form der ersten Ausführungsform gemäß Figur 4a. Hier kann der gewichtsseitige Abschnitt 26 des Lagerarms 20 über den Verbindungspunkt zum zweiten Schwenkarm 40 hervorstehen. Am gewichtsseitigen Abschnitt 26 des Lagerarms 20 kann ferner ein Ausgleichsgewicht 28 angebracht sein, das den Lagerarm 20 ausbalanciert. Das Ausgleichsgewicht 28 dient somit dazu, das Eigengewicht des kameraseitigen Abschnitts 24 des Lagerarms 20 auszugleichen. In dem Ausschnitt in Figur 4b ist eine Positionierungsvariante des Ausgleichsgewichts 28 gezeigt. Die Position des Ausgleichsgewichts 28 kann entsprechend dem Gewicht so bestimmt werden, dass das Gewicht des kameraseitigen Abschnitts 24 des Lagerarms 20 durch den gewichtsseitigen Abschnitts 26 des Lagerarms 20 und/oder das Ausgleichsgewicht 28 ausgeglichen wird. Somit liegt der Schwerpunkt des Lagerarms 20 im Verbindungspunkt V1. Das Ausgleichsgewicht 44 am zweiten Schwenkarm 40 dient dann dazu, das Gewicht des ersten Schwenkarms 30 und der Kamerahalteeinrichtung 32 auszugleichen. Das Ausgleichsgewicht 42 dient wiederum zum Ausgleich des Eigengewichts der Kamera 36. So ist dann der Gesamtschwerpunkt S1b der Gewichtsseite G, der Lagerpunkt V1 des Lagerarms 20 am Stützfuß 12 und der Gesamtschwerpunkt S2b der Kameraseite K im Wesentlichen auf einer geraden Linie (siehe gestrichelte Linie in Figur 4b). Darüber hinaus liegen die Gesamtschwerpunkte S1b und S2b auch auf den jeweiligen Schwenkarmen 30, 40. Dies bleibt auch so wenn das Ausgleichsgewicht 42 für die Kamera 36 angebracht wird. Zusätzlich sind auch hier der Verbindungspunkt V1 des Stützfußes 12 mit dem Lagerarm 20, der Aufhängungspunkt V2 der Kamera 36 und der Aufhängungspunkt V3 des Kameraausgleichsgewichts 42 im Wesentlichen auf einer geraden Linie (siehe gepunktete Linie in Figur 4b). Diese Ausführungsform nach Figur 4b ist einfacher zu berechnen, da die Komplexität des Gewichtsausgleichs im Vergleich zur Ausführungsform nach Figur 4a reduziert ist. Zuerst wird der Lagerarm 20 ausbalanciert, dann die beiden parallelen Schwenkarme 30, 40 und dann die Kamera 36. Der Gesamtschwerpunkt S1b der Gewichtsseite G ergibt sich demnach aus dem Ausgleichsgewicht 44 und dem Eigengewicht des zweiten Schwenkarms 40. Der Gesamtschwerpunkt S2b der Kameraseite K ergibt sich aus dem Eigengewicht der Kamerahalteeinrichtung 32 und dem Eigengewicht des ersten Schwenkarms 30. Die Ausrichtung der Haltepunkte V2, V3 und der Gesamtschwerpunkte S1b, S2b ist analog zu der aus Figur 4a (siehe gestrichelte und gepunktete Linien in Figur 4b). Im Übrigen wird ergänzend insbesondere auf Figuren. 1 bis 4a und die zugehörige Beschreibung verwiesen.

Mit den Ausführungsformen nach Figuren 4a und 4b können unterschiedliche Kameras mit der gleichen Halte- und Bewegungsvorrichtung 10 verwendet und gleichzeitig ein im Wesentlichen perfektes Gleichgewicht aufrechterhalten werden. Bei Veränderung der Nutzlast kann so einfach das Ausgleichsgewicht 42 entsprechend ermittelt und angepasst werden.

Figur 4c zeigt eine weitere Ausführungsform, bei der der Gewichtsausgleich der Kamera 32 gleichzeitig mit dem Gewichtsausgleich des Lagerarms 20 und der Schwenkarme 30, 40 durchgeführt wird. Bei dieser Ausführungsform weist der zweite Schwenkarm 40 eine Möglichkeit zur Verstellung eines Ausgleichgewichts 44' auf, hier als Schlitz 48 dargestellt, in dem das Ausgleichsgewicht 44' entlang des zweiten Schwenkarms 40 verschoben und befestigt werden kann. So kann ebenfalls ein Ausgleich des Gewichts für jede beliebige Kamera eingestellt werden. Das bzw. die verschiebbaren Gewichte müssen allerdings ebenfalls an eine geänderte Kamera angepasst werden. Im Prinzip ersetzt das verschiebbare Ausgleichsgewichts 44' lediglich gleichzeitig das vorstehend beschriebene Ausgleichsgewicht 44 und das Kameraausgleichsgewicht 42. Die konkrete Position und das konkrete Gewicht des verschiebbaren Ausgleichgewichts 44' wird dann für jede Kamera entsprechend ausgesucht und eingestellt. Der Gesamtschwerpunkt S1c der Gewichtsseite G der Halte- und Bewegungsvorrichtung 10, der Verbindungspunkt V1 von Lagerarm 20 und Stützfuß 12 und der Gesamtschwerpunkt S2a der Kameraseite K liegen in jeder Stellung der Halte- und Bewegungsvorrichtung 10 im Wesentlichen auf einer geraden Linie liegen (siehe gestrichelte Linie in Figur 4c). Der Gesamtschwerpunkt S1c der Gewichtsseite G ergibt sich hier aus dem verschiebbaren Ausgleichsgewicht 44', dem Eigengewicht des zweiten Schwenkarms 40 und dem Eigengewicht des gewichtsseitigen Lagerarmabschnitts 26. Der Gesamtschwerpunkt S2c der Kameraseite K ergibt sich aus dem Eigengewicht der Kamerahalteeinrichtung 32, dem Eigengewicht des ersten Schwenkarms 30, dem Eigengewicht des kameraseitigen Lagerarmabschnitts 24 und der Kamera 36. Bei Ausführungsformen, wie beispielsweise der Ausführungsform gemäß Fig. 4c, bei denen sich der Eigenschwerpunkt der Nutzlast 36 senkrecht über oder unter der Achse des Befestigungspunkts V2 befindet, kann der Schwerpunkt, wie Eigenschwerpunkt, der Nutzlast 36 direkt in der Achse des Befestigungspunkts V2 anzunehmen und/oder definiert sein, um die nachfolgenden Berechnungen der Gewichte und Abstände durchführen zu können. Der Schwerpunkt oder Eigenschwerpunkt der Nutzlast 36 kann somit, auch bei einer vertikalen und/oder horizontalen Auslenkung oder Anbringung der Nutzlast 36, im Befestigungspunkt V2 der Nutzlast 36 am ersten Schwenkarm 30 definiert sein. Die Kamera 36 ist in der Ausführungsform gemäß Fig. 4c im Gesamtschwerpunkt der Kameraseite enthalten, weil das Ausgleichsgewicht 44' auch die Kamera 36 ausgleichen muss. Im Übrigen wird ergänzend insbesondere auf Figuren. 1 bis 4b und die zugehörige Beschreibung verwiesen.

Die Berechnung der Ausgleichsgewichte und deren Platzierungen in den Ausführungsformen nach den Figuren 4a-4c wird im Folgenden anhand der Figuren 6a-6c kurz erläutert.

Die Definition der einzelnen Parameter und Variablen für die Figuren 6a-c lautet:

a     Eigengewicht des nutzlastseitigen/kameraseitigen Lagerarm-Abschnittes 24,

b     Eigengewicht des nutzlastseitigen/kameraseitigen ersten Schwenkarms 30 ggf. mit Nutzlasthalteeinrichtung/Kamerahalteeinrichtung 32,

c     Eigengewicht der Kamera 36,

d     Eigengewicht des gewichtsseitigen Lagerarm-Abschnittes 26,

e     Eigengewicht des gewichtsseitigen zweiten Schwenkarms 40,

f     Eigengewicht des Ausgleichsgewichts 42 zum Ausgleich der Nutzlast/Kamera 36,

g     Eigengewicht des Ausgleichsgewichts 44 zum Ausgleich der Eigenlasten der beweglichen Arme, insbesondere des nutzlastseitigen/kameraseitigen ersten Schwenkarms 30 und/oder des nutzlastseitigen/kameraseitigen Lagerarm-Abschnittes 24,

h     Eigengewicht des Ausgleichsgewichts 28 zum Ausgleich des Lagerarmes, insbesondere des nutzlastseitigen/kameraseitigen Lagerarm-Abschnittes 24,

i    Eigengewicht des Ausgleichsgewichts 44' zum Ausgleich der Eigenlasten der beweglichen Arme, insbesondere des nutzlastseitigen/kameraseitigen ersten Schwenkarms 30 des nutzlastseitigen/kameraseitigen Lagerarm-Abschnittes 24, der Nutzlasthalteeinrichtung/Kamerahalteeinrichtung 32 und/oder der Nutzlast/Kamera 36,

p    Abstand vom gewichtsseitigen Gelenkpunkt zum Schwerpunkt und/oder Befestigungspunkt/Anbringungspunkt des Ausgleichsgewichts (g), und/oder Abstand vom Befestigungspunkt/Verbindungspunkt des gewichtsseitigen zweiten Schwenkarms 40 am Lagerarm 20 zum Schwerpunkt und/oder Befestigungspunkt/Anbringungspunkt des Ausgleichsgewichts (g) für den Ausgleich der Eigenlasten der beweglichen Arme, insbesondere des nutzlastseitigen/kameraseitigen ersten Schwenkarms 30 und/oder des nutzlastseitigen/kameraseitigen Lagerarm-Abschnittes 24,

m    Abstand vom gewichtsseitigen Gelenkpunkt zum Schwerpunkt und/oder Befestigungspunkt/Anbringungspunkt des Ausgleichsgewicht (i), und/oder Abstand vom Befestigungspunkt/Verbindungspunkt des gewichtsseitigen zweiten Schwenkarms 40 am Lagerarm 20 zum Schwerpunkt und/oder Befestigungspunkt/Anbringungspunkt des Ausgleichsgewichts (i) für den Ausgleich der Eigenlasten der beweglichen Arme, insbesondere des nutzlastseitigen/kameraseitigen ersten Schwenkarms 30 des nutzlastseitigen/kameraseitigen Lagerarm-Abschnittes 24, der Nutzlasthalteeinrichtung/Kamerahalteeinrichtung 32 und/oder der Nutzlast/Kamera 36,

o    Abstand vom gewichtsseitigen Gelenkpunkt zum Schwerpunkt, wie Massenschwerpunkt, des gewichtsseitigen zweiten Schwenkarms 40, und/oder Abstand vom Befestigungspunkt/Verbindungspunkt des gewichtsseitigen zweiten Schwenkarms 40 am Lagerarm 20 zum Schwerpunkt, wie Massenschwerpunkt, des gewichtsseitigen zweiten Schwenkarms 40,

s    Abstand vom Verbindungspunkt V1, wie Befestigungspunkt V1 des Lagerarms 20, zum Schwerpunkt, wie Massenschwerpunkt, des gewichtsseitigen Lagerarm-Abschnittes 26,

t    Abstand vom Verbindungspunkt V1, wie Befestigungspunkt V1 des Lagerarms 20, zum gewichtsseitigen Gelenkpunkt und/oder Abstand vom Verbindungspunkt V1, wie Befestigungspunkt V1 des Lagerarms 20, zum Befestigungspunkt/Verbindungspunkt des gewichtsseitigen zweiten Schwenkarms 40 am Lagerarm 20,

r    Abstand vom gewichtsseitigen Gelenkpunkt zum Schwerpunkt und/oder Befestigungspunkt/Anbringungspunkt des Ausgleichsgewichts (f), und/oder Abstand vom Befestigungspunkt/Verbindungspunkt des gewichtsseitigen zweiten Schwenkarms 40 am Lagerarm 20 zum Schwerpunkt und/oder Befestigungspunkt/Anbringungspunkt des Ausgleichsgewichts (f) für den Ausgleich der Nutzlast/Kamera 36,

u    Abstand vom Verbindungspunkt V1, wie Befestigungspunkt V1 des Lagerarms 20, zum nutzlastseitigen/kameraseitigen Gelenkpunkt, und/oder Abstand vom Verbindungspunkt V1, wie Befestigungspunkt V1 des Lagerarms 20, zum Befestigungspunkt/Verbindungspunkt des nutzlastseitigen ersten Schwenkarms 30 am Lagerarm 20,

l    Abstand vom nutzlastseitigen/kameraseitigen Gelenkpunkt zum Haltepunkt V2, und/oder Abstand vom Befestigungspunkt/Verbindungspunkt des nutzlastseitigen ersten Schwenkarms 30 am Lagerarm 20 zum Schwerpunkt und/oder Befestigungspunkt der Nutzlast/Kamera 36 und/oder Nutzlasthalteeinrichtung/Kamerahalteeinrichtung 32,

v    Abstand vom Verbindungspunkt V1, wie Befestigungspunkt V1 des Lagerarms 20, zum Schwerpunkt, wie Massenschwerpunkt, des nutzlastseitigen/kameraseitigen Lagerarm-Abschnittes 24,

w    Abstand vom nutzlastseitigen/kameraseitigen Gelenkpunkt zum Schwerpunkt, wie resultierenden Massenschwerpunkt, des nutzlastseitigen/kameraseitigen ersten Schwenkarms 30 ggf. mit Nutzlasthalteeinrichtung/Kamerahalteeinrichtung 32, und/oder Abstand vom Befestigungspunkt/Verbindungspunkt des nutzlastseitigen/kameraseitigen ersten Schwenkarms 30 am Lagerarm 20 zum Schwerpunkt, wie Massenschwerpunkt, des nutzlastseitigen/kameraseitigen ersten Schwenkarms 30 ggf. mit Nutzlasthalteeinrichtung/Kamerahalteeinrichtung 32,

x    Abstand vom Verbindungspunkt V1, wie Befestigungspunkt V1 des Lagerarms 20, zum Schwerpunkt und/oder Befestigungspunkt/Anbringungspunkt des Ausgleichsgewicht (h) und/oder Abstand vom Verbindungspunkt V1, wie Befestigungspunkt V1 des Lagerarms 20, zum Schwerpunkt und/oder Befestigungspunkt/Anbringungspunkt des Ausgleichsgewichts (h) für den Ausgleich des Lagerarmes 20, insbesondere des nutzlastseitigen/kameraseitigen Lagerarm-Abschnittes 24.

Die Ausgestaltung der einzelnen Elemente der unterschiedlichen Ausführungsformen kann dann mit den folgenden Formeln berechnet werden:

Für die Ausführungsform in den Figuren 1 bis 4a und 6a: vorausgesetzt:

$$\frac{l}{u} = \frac{r}{t}$$

$$f = \frac{c\cdot u + c\cdot l}{r+t} \qquad g = \frac{a\cdot v + b\cdot u - d\cdot s - e\cdot t}{t} \qquad p = \frac{b\cdot t\cdot w - e\cdot o\cdot t}{a\cdot v + b\cdot u - e\cdot t - d\cdot s}$$

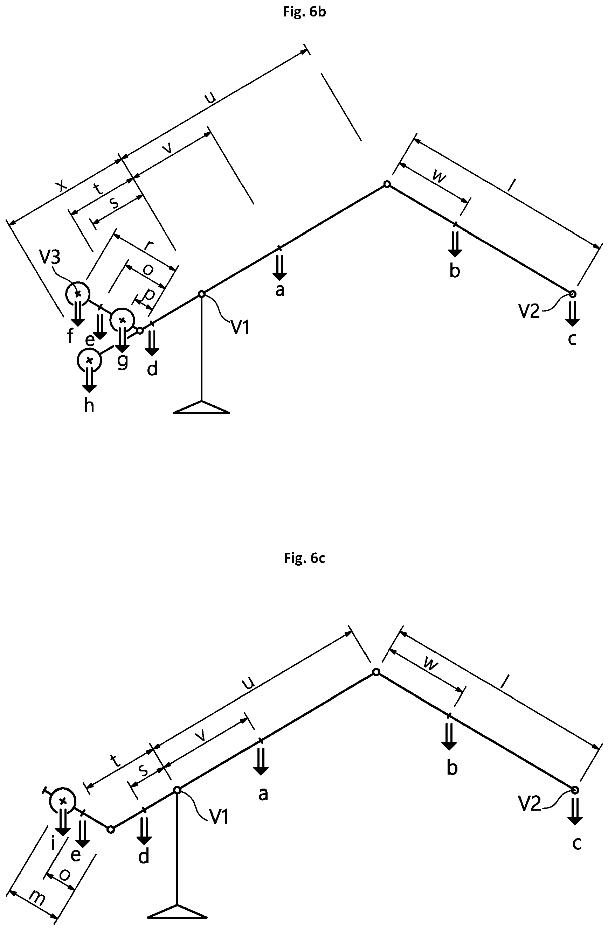

Für die Ausführungsform in den Figuren 4b und 6b: vorausgesetzt:

$$\frac{l}{u} = \frac{r}{t}$$

für **x** vorbestimmt: $\quad h = \dfrac{v\cdot a - d\cdot s}{x} \qquad$ für **h** vorbestimmt: $\quad x = \dfrac{v\cdot a - d\cdot s}{h}$

$$g = \frac{b\cdot u - e\cdot t}{t} \qquad p = \frac{b\cdot t\cdot w - e\cdot o\cdot t}{b\cdot u - e\cdot t}$$

$$f = \frac{c\cdot u + c\cdot l}{r+t}$$

Für die Ausführungsform in den Figuren 4c und 6c:

$$i = \frac{a\cdot v + c\cdot u + b\cdot u - d\cdot s - e\cdot t}{t} \qquad m = \frac{b\cdot t\cdot w + c\cdot l\cdot t - e\cdot o\cdot t}{a\cdot v + c\cdot u + b\cdot u - e\cdot t - d\cdot s}$$

Mit diesen Formeln lässt sich der dynamische Gewichtsausgleich für die Halte- und Bewegungsvorrichtung 10 berechnen und konstruieren.

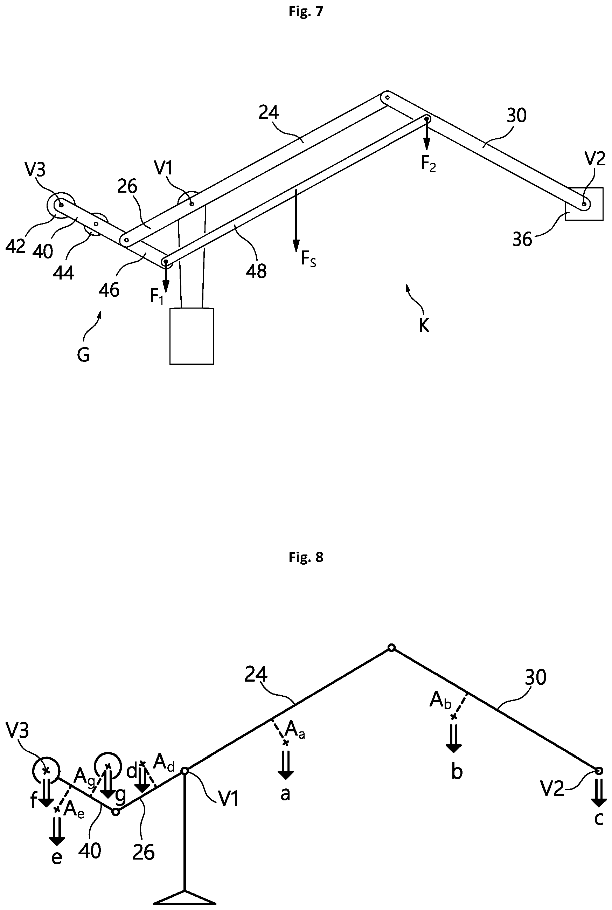

Figur 7 zeigt eine weitere Ausführungsform der Halte- und Bewegungsvorrichtung mit weiteren Bauteilen eines Parallelogramm-Mechanismus. Solch ein Mechanismus weist weitere Bauteile auf die in den aufgeführten Berechnungsformeln für den Gewichtsausgleich einfließen müssen. Solche Bauteile müssen in die Eigenlasten der benachbarten Bauteile eingerechnet werden. Die hinzugekommenen Teile bzw. Abschnitte 46, 48 zum Ausbilden des Parallelogramm-Mechanismus müssen berücksichtigt werden und beeinflussen ebenfalls das Gleichgewicht. Der zusätzliche Parallelogramm-Stab 48 besitzt ein Eigengewicht und einen Eigenschwerpunkt der Kraft $F_S$. $F_S$ kann somit das Eigengewicht des Parallelogramm-Stabs 48 im Eigenschwerpunkt darstellen. Diese Kraft bzw. das Eigengewicht $F_S$ muss in zwei Komponenten zerlegt werden, die die Haltekraft des Stabes 48 an dessen Enden repräsentieren. $F_S$ ist dabei die Summe von F, und $F_2$. Ein nicht-mittiger Schwerpunkt ist dabei umgekehrt direktproportional der Strecken/Längen vom Eigenschwerpunkt zu den Enden zu zerlegen. Die Kraft bzw. das Gewicht F, wird dann als Gewichtskomponente im Anbringungspunkt am Bauteil 40 dem zweiten Schwenkarm 40 zugerechnet und wirkt sich auf dessen Eigengewicht und Massenschwerpunktlage aus. Analog wird die Kraft bzw. das Gewicht $F_2$ als Gewichtskomponente im Anbringungspunkt am Bauteil 30 dem ersten Schwenkarm 30 zugerechnet und wirkt sich auf dessen Eigengewicht und Massenschwerpunktlage aus. Der verlängerte Teil 46 des zweiten Schwenkarms 40 wird diesem zugerechnet. Im Übrigen wird ergänzend insbesondere auf Figuren. 1 bis 6c und die zugehörige Beschreibung verwiesen.

Figur 8 zeigt schematisch ein Ausführungsbeispiel mit außeraxial liegenden Eigenlast-Schwerpunkten der beweglichen Arme. Wie vorstehend dargestellt sind für den grundsätzlichen geometrischen Aufbau insbesondere die Abstände zwischen den Gelenkpunkten und die Ausrichtung derer Verbindungslinien maßgeblich. Die einzelnen Arme dienen als konstruktive Verbindung der Gelenkpunkte können aber in ihrer Form frei gestaltet sein. Die Berechnungsformeln berücksichtigen bereits, dass Eigenschwerpunkte eines Bauteils zum Beispiel des Auflagerarms 20 nicht zwingend auf halber Strecke zwischen den Enden des Bauteils liegen müssen. Wohl aber können diese auf der gedachten Verbindungslinie zwischen den Gelenkpunkten liegen. Um volle Freiheit der Gestaltung zu ermöglichen können Bauteile auch mit außeraxial liegenden Eigenschwerpunkten ausgeführt werden. Im in Figur 8 gezeigten Ausführungsbeispiel befinden sich die Eigenschwerpunkte der Bauteile/Arme, beispielsweise des ersten Schwenkarm 30, außerhalb der Verbindungslinie zwischen den Gelenkpunkten des jeweiligen Bauteils/Arms. Die Entfernung zu dieser Linie kann als Außeraxialität des Schwerpunktes bezeichnet werden und ist die Strecke $A_a$, $A_b$, $A_d$, $A_e$ bzw. $A_g$. Die an diesen außeraxialen Schwerpunkten angreifende Kraft bzw. Gewicht ist a, b, d, e bzw. g. Die Außeraxialitäten der Eigengewichte a und d der Auflagerarmabschnitte 24, 26 können gegenseitig ausgeglichen sein und durch die Formel $d*A_d=a*A_a$ be-schrieben bzw. definiert sein. Die Außeraxialitäten der Eigengewichte b und e können durch die Außeraxialität des Gegengewichts g ausgeglichen sein und durch die Formel $A_g=(b*A_b + e*A_e)/g$ beschrieben bzw. definiert sein. Die Außeraxialität von Schwerpunkten ist für jede Ausführungsform anders zu berücksichtigen. Grundsätzlich kann gesagt werden, dass die Außeraxialität des Eigengewichtsschwerpunktes eines Bauteils am jeweils gegenüberliegenden Bauteil durch eine entgegengesetzte Außeraxialität des Gegengewichtes ausgeglichen werden kann. Also beispielsweise vom vorderen Auslegerarm 30 am hinteren Auslegerarm 40 und/oder vom vorderen Abschnitt 24 des Auflagerarms 20 am hinteren Abschnitt 26 des Auflagerarms 20. Im Übrigen wird ergänzend insbesondere auf Figuren. 1 bis 7 und die zugehörige Beschreibung verwiesen.

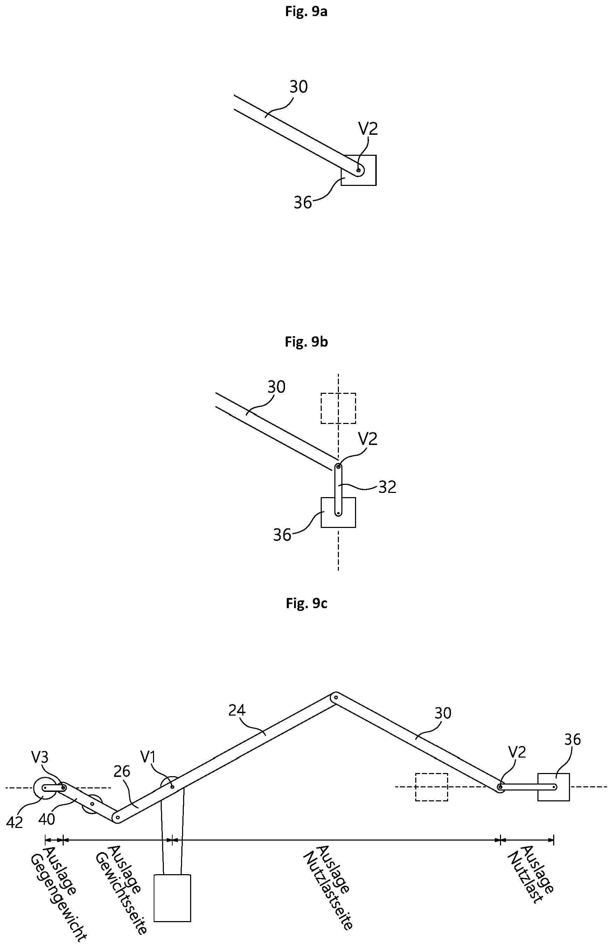

Figur 9a zeigt eine Variante, bei der der Nutzlast-Eigenschwerpunkt auf der Achse des Aufhängepunktes V2 für die Nutzlast 36 liegt. Die Nutzlast 36 ist so angebracht, dass ihr Eigenschwerpunkt auf der Achse des Aufhängepunktes V2 für die Nutzlast 36 und/oder direkt im Aufhängepunkt V2 liegt. Für die Ermittlung des Gesamtschwerpunktes der Nutzlastseite K kann insbesondere diese Positionierung der Nutzlast 36 angenommen oder definiert werden. Dies kann auch der Fall sein, wenn die Nutzlast 36 und/oder ihr Eigenschwerpunkt eigentlich vertikal und/oder horizontal ausgelenkt angebracht bzw. vorhanden ist. Das stellungsunabhängige Gleichgewicht ist dadurch ebenfalls gegeben. In Richtung der Achse (in Figur 9a senkrecht zur Zeichenebene) kann diese versetzt liegen.

Figur 9b zeigt eine Variante, bei der der Nutzlast-Eigenschwerpunkt stellungsunabhängig senkrecht unter oder senkrecht über der Achse des Aufhängepunktes V2 für die Nutzlast 36 liegt. Die Nutzlast 36 und/oder die Haltevorrichtung 32 für die Nutzlast 36 kann auch so angebracht werden, dass sich ihr Eigenschwerpunkt senkrecht über oder senkrecht unter der Achse des Aufhängepunktes V2 für die Nutzlast 36 liegt. Dabei kann sichergestellt sein, dass auch in anderen Stellungen des ersten Schwenkarms 30 die Position und/oder Ausrichtung der Nutzlast 36 und/oder der Haltevorrichtung 32 für die Nutzlast 36 in der Senkrechten im Wesentlichen unverändert bleibt. Zum Beispiel kann eine Verdrehung des ersten Schwenkarms 30 kompensiert sein. Das kann zum Beispiel durch eine entsprechende Mechanik realisiert sein, welche die Position und/oder Ausrichtung der Nutzlast 36 und/oder der Haltevorrichtung 32 für die Nutzlast 36 um die Achse V2 mit der Ausrichtung des Auflagers am Basispunkt V1 des Auflagerarms 20 koppelt.

Figur 9c zeigt eine Variante, bei der der Nutzlast-Eigenschwerpunkt stellungsunabhängig waagerecht/horizontal versetzt zur Achse des Aufhängepunktes V2 für die Nutzlast 36 liegt. Die Nutzlast 36 und/oder die Haltevorrichtung 32 für die Nutzlast 36 kann so angebracht werden, dass sich ihr Eigenschwerpunkt auch horizontal verschoben zum Aufhängepunkt V2 befindet. Es kann dieselbe Mechanik zur Haltung der Position und/oder Ausrichtung der Nutzlast 36 und/oder der Haltevorrichtung 32 für die Nutzlast 36 vorgesehen sein, wie in der vorstehend beschriebenen Variante gemäß Figur 9b, jedoch so, dass die Position und/oder Ausrichtung der Nutzlast 36 und/oder der Haltevorrichtung 32 für die Nutzlast 36 in der Horizontalen im Wesentlichen unverändert bleibt. Zusätzlich kann das Gegengewicht 42 für die Nutzlast 36 in die entgegengesetzte horizontale Richtung verschoben angebracht sein. Das Gegengewicht 42 kann zusätzlich, in ähnlicher Weise wie die vorstehend beschriebe Kopplungsmechanik, in der Position, Ausrichtung und/oder Drehung um den Achspunkt V3 mit dem Basisauflager, wie mit der Ausrichtung des Auflagers am Basispunkt V1 des Auflagerarms 20, gekoppelt sein. Das Gegengewicht 42 kann dabei die folgende horizontale Gegenverschiebung (Auslage Gegengewicht) aufweisen:

$$Auslage\ Gegengewicht = \frac{Auslage\ Gewichtsseite}{Auslage\ Nutzlastseite} * Auslage\ Nutzlast$$

Das Gegengewicht 42 muss nicht zwangsläufig in die entgegengesetzte horizontale Richtung verschoben angebracht sein. Das Gegengewicht 42 und/oder dessen Schwerpunkt kann alternativ, beispielsweise wie in den vorstehend beschriebenen Ausführungsformen, direkt am zweiten Schwenkarm 40 angeordnet sein. Zum Ausgleich des durch die horizontal verschobene Nutzlast 36 hervorgerufenen Drehmoments im Aufhängepunkt V2, kann eine Parallelmechanismus vorgesehen sein. Der Parallelmechanismus kann am ersten Schwenkarm 30 und/oder am nutzlastseitigen Abschnitt 24 des Lagerarms 20 angeordnet sein. Der Parallelmechanismus kann beispielsweise die wie zu Fig. 5 beschriebene Parallelmechanik aufweisen. Dadurch kann das Drehmoment in das Basisauflager und/oder in den Stützfuß 12 geleitet werden.

Die Varianten gemäß Figuren 9a, 9b und 9c können beliebig miteinander kombiniert werden.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.


Bezugszeichen


| | |
|---|---|
| 10 | Halte- und Bewegungsvorrichtung |
| 12 | Stützfuß |
| 14 | Standfläche |
| 20 | Lagerarm |
| 22 | Querstab |
| 23 | Räder |
| 24 | kameraseitiges Element/Abschnitt |
| 25 | Kettenzug/Riemen |
| 26 | gewichtseitiges Element/Abschnitt |
| 27 | Räder |
| 28 | Ausgleichsgewicht |
| 29 | Kettenzug/Riemen |
| 30 | erster Schwenkarm |
| 31 | Aufhängungspunkt |
| 32 | Kamerahalteeinrichtung |
| 36 | Kamera |
| 40 | zweiter Schwenkarm |
| 42 | Ausgleichsgewicht (Kamera) |
| 44 | Ausgleichsgewicht |
| 44' | Ausgleichsgewicht |
| 46 | Abschnitt des Parallelogramm-Mechanismus |
| 48 | Teil des Parallelogramm-Mechanismus |
| G | gewichtsseitiger Bereich |
| K | kameraseitiger Bereich |
| S1a | gewichtsseitiger Schwerpunkt |
| S1b | gewichtsseitiger Schwerpunkt |
| S1c | gewichtsseitiger Schwerpunkt |
| S2a | kameraseitiger Schwerpunkt |
| S2b | kameraseitiger Schwerpunkt |
| S2c | kameraseitiger Schwerpunkt |
| V1 | Verbindungspunkt |
| V2 | Haltepunkt |
| V3 | Haltepunkt |
| $F_S$ | Kraft / Eigengewicht des Parallelogramm-Stabs im Eigenschwerpunkt |
| $F_1$ | Kraft- / Gewichtskomponente des Parallelogramm-Stabs |
| $F_2$ | Kraft- / Gewichtskomponente des Parallelogramm-Stabs |
| $A_a$ | Außeraxialität des Schwerpunkts des nutzlastseitigen Lagerarmabschnitts |
| $A_b$ | Außeraxialität des Schwerpunkts des ersten Schwenkarms |
| $A_d$ | Außeraxialität des Schwerpunkts des gewichtsseitigen Lagerarmabschnitts |
| $A_e$ | Außeraxialität des Schwerpunkts des zweiten Schwenkarms |
| $A_g$ | Außeraxialität des Schwerpunkts des Ausgleichsgewichts |

**Patentansprüche**

1. Halte- und Bewegungsvorrichtung (10) für eine Nutzlast (36), umfassend:

   einen Stützfuß (12);
   einen Lagerarm (20), der schwenkbar an dem Stützfuß (12) befestigt ist, so dass ein nutzlastseitiger Abschnitt (24) und ein gewichtseitiger Abschnitt (26) ausgebildet sind; einen ersten Schwenkarm (30), der nutzlastseitig mit dem nutzlastseitigen Abschnitt (24) des Lagerarms (20) verbunden ist und an dem eine Nutzlast (36) und/oder eine Halteeinrichtung (32) für eine Nutzlast (36) anbringbar oder angebracht ist; und einen zweiten Schwenkarm (40), der gewichtseitig mit dem gewichtseitigen Abschnitt (26) des Lagerarms (20) verbunden ist und an dem wenigstens ein Ausgleichsgewicht (42, 44, 44') anbringbar oder angebracht ist,
   wobei der Lagerarm (20), der erste Schwenkarm (30) und der zweite Schwenkarm (40) derart miteinander verbunden sind, dass die Ausrichtung des ersten und des zweiten Schwenkarms (30, 40) in jeder Stellung zueinander im Wesentlichen parallel sind,
   **dadurch gekennzeichnet, dass**
   der Schwerpunkt (S1a, S1b, S1c) der Gewichtsseite (G) mit oder ohne Ausgleichsgewicht (42, 44, 44'), der Schwerpunkt (S2a, S2b, S2c) der Nutzlastseite (K) mit oder ohne Nutzlast (36), und der Befestigungspunkt (V1) des Lagerarms (20) am Stützfuß (12) im Wesentlichen auf einer geraden Linie liegen.

2. Halte- und Bewegungsvorrichtung (10) für eine Nutzlast (36), umfassend:

   einen Stützfuß (12);
   einen Lagerarm (20), der schwenkbar an dem Stützfuß (12) befestigt ist, so dass ein nutzlastseitiger Abschnitt (24) und ein gewichtseitiger Abschnitt (26) ausgebildet sind; einen ersten Schwenkarm (30), der nutzlastseitig mit dem nutzlastseitigen Abschnitt (24) des Lagerarms (20) verbunden ist und an dem eine Nutzlast (36) und/oder eine Halteeinrichtung (32) für eine Nutzlast (36) anbringbar oder angebracht ist; und einen zweiten Schwenkarm (40), der gewichtseitig mit dem gewichtseitigen Abschnitt (26) des Lagerarms (20) verbunden ist und an dem wenigstens ein Ausgleichsgewicht (42, 44, 44') anbringbar oder angebracht ist,
   wobei der Lagerarm (20), der erste Schwenkarm (30) und der zweite Schwenkarm (40) derart miteinander verbunden sind, dass die Ausrichtung des ersten und des zweiten Schwenkarms (30, 40) in jeder Stellung zueinander im Wesentlichen parallel sind,
   **dadurch gekennzeichnet, dass**
   der gewichtseitige zweite Schwenkarm (40) und/oder der gewichtseitige Lagerarmabschnitt (26) derart ausgebildet sind, dass das Gewicht des nutzlastseitigen ersten Schwenkarms (30) und/oder des nutzlastseitigen Lagerarmabschnitts (24) in jeder Stellung der Halte- und Bewegungsvorrichtung (10) ausgeglichen ist.

3. Halte- und Bewegungsvorrichtung (10) nach Anspruch 1 oder 2, wobei das Verhältnis des Abstands (l) vom Verbindungspunkt des ersten Schwenkarms (30) am Lagerarm (20) zum Befestigungspunkt (V2) der Nutzlast (36) oder der Halteeinrichtung (32) am ersten Schwenkarm (30) zu dem Abstand (u) vom Befestigungspunkt (V1) des Lagerarms (20) am Stützfuß (12) zum Verbindungspunkt des ersten Schwenkarms (30) am Lagerarm (20) im Wesentlichen gleich dem Verhältnis des Abstands (r) vom Verbindungspunkt des zweiten Schwenkarms (40) am Lagerarm (20) zum Schwerpunkt und/oder Anbringungspunkt (V3) des Ausgleichsgewichts (42, 44') am zweiten Schwenkarm (40) zu dem Abstand (t) vom Befestigungspunkt (V1) des Lagerarms (20) am Stützfuß (12) zum Verbindungspunkt des zweiten Schwenkarms (40) am Lagerarm (20) ist.

4. Halte- und Bewegungsvorrichtung (10) nach Anspruch 1 oder 3, bei der der gewichtseitige zweite Schwenkarm (40) und/oder der gewichtseitige Lagerarmabschnitt (26) derart ausgebildet sind, dass das Gewicht des nutzlastseitigen ersten Schwenkarms (30) und/oder des nutzlastseitigen Lagerarmabschnitts (24) in jeder Stellung der Halte- und Bewegungsvorrichtung (10) ausgeglichen ist.

5. Halte- und Bewegungsvorrichtung (10) nach Anspruch 2, 3 oder 4, wobei der Schwerpunkt (S1a, S1 b, S1c) der Gewichtsseite (G), der Schwerpunkt (S2a, S2b, S2c) der Nutzlastseite (K) und der Befestigungspunkt (V1) des Lagerarms (20) am Stützfuß (12) im Wesentlichen auf einer geraden Linie liegen.

6. Halte- und Bewegungsvorrichtung (10) nach wenigstens einem der vorhergehenden Ansprüche, wobei der Abstand (l) vom Verbindungspunkt des ersten Schwenkarms (30) am Lagerarm (20) zum Befestigungspunkt (V2) der Nutzlast (36) oder der Halteeinrichtung (32) am ersten Schwenkarm (30) und der Abstand (u) vom Befestigungspunkt (V1) des Lagerarms (20) am Stützfuß (12) zum Verbindungspunkt des ersten Schwenkarms (30) am Lagerarm (20) im Wesentlichen gleich lang ist oder der Abstand (l) vom Verbindungspunkt des ersten Schwenkarms (30) am Lagerarm (20) zum Befestigungspunkt (V2) der Nutzlast (36) oder der Halteeinrichtung (32) am ersten Schwenkarm (30) größer oder kleiner als der Abstand (u) vom Befestigungspunkt (V1) des Lagerarms (20) am Stützfuß (12) zum Verbindungspunkt des ersten Schwenkarms (30) am Lagerarm (20) ist.

7.  Halte- und Bewegungsvorrichtung (10) nach wenigstens einem der vorhergehenden Ansprüche, wobei der Abstand (r) vom Verbindungspunkt des zweiten Schwenkarms (40) am Lagerarm (20) zum Schwerpunkt und/oder Anbringungspunkt (V3) des Ausgleichsgewichts (42, 44') am zweiten Schwenkarm (40) und der Abstand (t) vom Befestigungspunkt (V1) des Lagerarms (20) am Stützfuß (12) zum Verbindungspunkt des zweiten Schwenkarms (40) am Lagerarm (20) im Wesentlichen gleich lang ist oder der Abstand (r) vom Verbindungspunkt des zweiten Schwenkarms (40) am Lagerarm (20) zum Schwerpunkt und/oder Anbringungspunkt (V3) des Ausgleichsgewichts (42, 44') am zweiten Schwenkarm (40) größer oder kleiner als der Abstand (t) vom Befestigungspunkt (V1) des Lagerarms (20) am Stützfuß (12) zum Verbindungspunkt des zweiten Schwenkarms (40) am Lagerarm (20) ist.

8.  Halte- und Bewegungsvorrichtung (10) nach wenigstens einem der vorhergehenden Ansprüche, wobei der Gesamtschwerpunkt (S1a, S1b, S1c) der Gewichtsseite (G), der Gesamtschwerpunkt (S2a, S2b, S2c) der Nutzlastseite (K) und der Befestigungspunkt (V1) des Lagerarms (20) am Stützfuß (12), insbesondere in jeder Stellung der Halte- und Bewegungsvorrichtung, im Wesentlichen auf einer geraden Linie liegen.

9.  Halte- und Bewegungsvorrichtung (10) nach wenigstens einem der vorhergehenden Ansprüche, wobei der Schwerpunkt (S1a, S1b, S1c) oder Gesamtschwerpunkt (S1a, S1b, S1c) der Gewichtsseite (G) das Eigengewicht (e) des gewichtseitigen zweiten Schwenkarms (40), das Eigengewicht (d) des gewichtseitigen Abschnitts (26) des Lagerarms (20) und/oder wenigstens ein gewichtseitiges Ausgleichsgewicht (28, 42, 44, 44') umfasst und/oder der Schwerpunkt (S2a, S2b, S2c) oder Gesamtschwerpunkt (S2a, S2b, S2c) der Nutzlastseite (K) das Eigengewicht (b) des nutzlastseitigen ersten Schwenkarms (30), das Eigengewicht (a) des nutzlastseitigen Abschnitts (24) des Lagerarms (20), das Eigengewicht der Halteeinrichtung (32) für die Nutzlast (36) und/oder das Eigengewicht (c) der Nutzlast (36) umfasst.

10. Halte- und Bewegungsvorrichtung (10) nach wenigstens einem der vorhergehenden Ansprüche, wobei der zweite Schwenkarm (40) ferner eine Halteeinrichtung für ein Ausgleichsgewicht (42, 44') für die Nutzlast (36) und/oder eine Halteeinrichtung für ein Ausgleichsgewicht (44, 44') für den nutzlastseitigen ersten Schwenkarm (30) und/oder den nutzlastseitigen Lagerarmabschnitt (24) aufweist.

11. Halte- und Bewegungsvorrichtung (10) nach wenigstens einem der vorhergehenden Ansprüche, bei der der zweite Schwenkarm (40) zumindest ein in Abhängigkeit der Nutzlast vorbestimmtes Ausgleichsgewicht (42, 44') aufweist.

12. Halte- und Bewegungsvorrichtung (10) nach Anspruch 11, wobei das in Abhängigkeit der Nutzlast vorbestimmte Ausgleichsgewicht (44') an einer entlang dem zweiten Schwenkarm (40) variablen Position befestigbar ist.

13. Halte- und Bewegungsvorrichtung (10) nach wenigstens einem der vorhergehenden Ansprüche, bei der der zweite Schwenkarm (40) zumindest ein in Abhängigkeit des Eigengewichts des nutzlastseitigen ersten Schwenkarms (30) und/oder des nutzlastseitigen Lagerarmabschnitts (24) vorbestimmtes Ausgleichsgewicht (44, 44') aufweist.

14. Halte- und Bewegungsvorrichtung (10) nach wenigstens einem der vorhergehenden Ansprüche, bei der der Stützfuß (12) in Bezug auf den jeweiligen Schwenkarm (30, 40) an einer ersten Längsseite des Lagerarms (20) und der erste und der zweite Schwenkarm (30, 40) an der jeweils gegenüberliegenden Längsseite des Lagerarms (20) befestigt sind.

15. Halte- und Bewegungsvorrichtung (10) nach wenigstens einem der vorhergehenden Ansprüche, bei der der Lagerarm (20) aus mehreren, insbesondere zwei, Elementen (24, 26) ausgebildet ist und der gewichtseitige Abschnitt (26) des Lagerarms (20) bezüglich des Stützfußes (12) auf der gegenüberliegenden Seite ausgebildet ist, als der nutzlastseitige Abschnitt (24) des Lagerarms (20).

16. Halte- und Bewegungsvorrichtung (10) nach wenigstens einem der vorhergehenden Ansprüche, bei der die Ausrichtung der Halteeinrichtung (32) für die Nutzlast (36) und/oder der Halteeinrichtung für das Ausgleichsgewicht (42, 44') für die Nutzlast (36) derart gesteuert ist, dass diese die Bewegung der Schwenkarme (30, 40) ausgleicht.

17. Halte- und Bewegungsvorrichtung (10) nach wenigstens einem der vorhergehenden Ansprüche, bei der ein Schwerpunkt und/oder Haltepunkt (V2) für die Nutzlast (36) und/oder für die Halteeinrichtung für die Nutzlast, ein Schwerpunkt und/oder Haltepunkt (V3) für ein Ausgleichsgewicht (42) für die Nutzlast (36) und der Befestigungspunkt (V1) des Lagerarms (20) am Stützfuß (12) und/oder bei der ein Schwerpunkt des ersten Schwenkarms (30) und ein Schwerpunkt des zweiten Schwenkarms (40) und ein Verbindungspunkt (V1) des Lagerarms (20) am Stützfuß (12) im Wesentlichen auf einer geraden Linie liegen.

18. Halte- und Bewegungsvorrichtung (10) nach wenigstens einem der vorhergehenden Ansprüche, bei der die Halteeinrichtung (32) für die Nutzlast (36) und/oder die Halteeinrichtung für das Ausgleichsgewicht (42, 44') für die Nutzlast (36) als seitlicher, vertikaler und/oder horizontaler Ausleger ausgebildet ist.

19. Halte- und Bewegungsvorrichtung (10) nach wenigstens einem der vorhergehenden Ansprüche, bei der die Schwenkarme (30, 40) und/oder der Lagerarm (20) über Kettenzüge, Riemen, Seilzüge, Elektromotoren und/oder hydraulische Drehantriebe miteinander bewegungsrelativ verbunden sind.

20. Halte- und Bewegungsvorrichtung (10) nach wenigstens einem der vorhergehenden Ansprüche, wobei die Nutzlast (36) eine Kamera, wie Foto- und/oder Videokamera, ist.

## Claims

1. Holding and moving device (10) for a useful load (36), comprising:

   a support foot (12);
   a bearing arm (20), which is secured pivotably onto the support foot (12), so that a useful load side section (24) and a weight-side section (26) are formed;
   a first pivot arm (30), which is connected on the useful load side to the useful load side section (24) of the bearing arm (20) and to which a useful load (36) and/or a holding device (32) for a useful load (36) can be attached or is attached; and
   a second pivot arm (40), which is connected on the weight side to the weight-side section (26) of the bearing arm (20) and to which at least one balance weight (42, 44, 44') can be attached or is attached,
   wherein the bearing arm (20), the first pivot arm (30) and the second pivot arm (40) are connected to one another such that the orientation of the first and the second pivot arm (30, 40) are essentially parallel to one another in each position,
   **characterised in that**
   the centre of gravity (S1a, S1b, S1c) of the weight side (G) with or without balance weight (42, 44, 44'), the centre of gravity (S2a, S2b, S2c) of the useful load side (K) with or without useful load (36) and the fastening point (V1) of the bearing arm (20) on the support foot (12) are essentially in a straight line.

2. Holding and moving device (10) for a useful load (36), comprising:

   a support foot (12);
   a bearing arm (20), which is secured pivotably onto the support foot (12), so that a useful load side section (24) and a weight-side section (26) are formed;
   a first pivot arm (30), which is connected on the useful load side to the useful load side section (24) of the bearing arm (20) and to which a useful load (36) and/or a holding device (32) for a useful load (36) can be attached or is attached; and
   a second pivot arm (40), which is connected on the weight side to the weight-side section (26) of the bearing arm (20) and to which at least one balance weight (42, 44, 44') can be attached or is attached,
   wherein the bearing arm (20), the first pivot arm (30) and the second pivot arm (40) are connected to one another such that the orientation of the first and the second pivot arm (30, 40) are essentially parallel to one another in each position,
   **characterised in that**
   the weight-side second pivot arm (40) and/or the weight-side bearing arm section (26) are designed such that the weight of the useful load side first pivot arm (30) and/or
   the useful load side bearing arm section (24) is balanced in each position of the holding and moving device (10).

3. Holding and moving device (10) according to claim 1 or 2, wherein the ratio of the distance (l) of the connecting point of the first pivot arm (30) on the bearing arm (20) to the fastening point (V2) of the useful load (36) or the holding device (32) on the first pivot arm (30) to the distance (u) from the fastening point (V1) of the bearing arm (20) on the support foot (12) to the connecting point of the first pivot arm (30) on the bearing arm (20) is essentially equal to the ratio of the distance (r) of the connecting point of the second pivot arm (40) on the bearing arm (20) to the centre of gravity and/or attachment point (V3) of the balance weight (42, 44') on the second pivot arm (40) to the distance (t) of the fastening point (V1) of the bearing arm (20) on the support foot (12) to the connecting point of the second pivot arm (40) on the bearing arm (20).

4. Holding and moving device (10) according to claim 1 or 3, wherein the weight-side second pivot arm (40) and/or the weight-side bearing arm section (26) are designed such that the weight of the useful load side first pivot arm (30) and/or the useful load side bearing arm section (24) is balanced in each position of the holding and moving device (10).

5. Holding and moving device (10) according to claim 2, 3 or 4, wherein the centre of gravity (S1a, S1b, S1c) of the weight side (G), the centre of gravity (S2a, S2b, S2c) of the useful load side (K) and the fastening point (V1) of the bearing arm (20) on the support foot (12) are essentially in a straight line.

6. Holding and moving device (10) according to at least one of the preceding claims, wherein the distance (l) of the connecting point of the first pivot arm (30) on the bearing arm (20) to the fastening point (V2) of the useful load (36) or the holding device (32) on the first pivot arm (30) and the distance (u) of the fastening point (V1) of the bearing arm (20) on the support foot (12) to the connecting point of the first pivot arm (30) on the bearing arm (20) is essentially of equal length or the distance (l) of the connecting point of the first pivot arm (30) on the bearing arm (20) to the fastening point (V2) of the useful load (36) or the holding device (32) on the first pivot arm (30) is greater or smaller than the distance (u) of the fastening point (V1) of the bearing arm (20) on the support foot (12) to the connecting point of the first pivot arm (30) on the bearing arm (20).

7. Holding and moving device (10) according to at least one of the preceding claims, wherein the distance (r) of the connecting point of the second pivot arm (40) on the bearing arm (20) to the centre of gravity and/or attachment point (V3) of the balance weight (42, 44') on the second pivot arm (40) and the distance (t) of the fastening point (V1) of the bearing arm (20) on the support foot (12) to the connecting point of the second pivot arms (40) on the bearing arm (20) is essentially of equal length or the distance (r) of the connecting point of the second pivot arm (40) on the bearing arm (20) to the centre of gravity and/or attachment point (V3) of the balance weight (42, 44') on the second pivot arm (40) is greater or smaller than the distance (t) of the fastening point (V1) of the bearing arm (20) on the support foot (12) to the connecting point of the second pivot arm (40) on the bearing arm (20).

8. Holding and moving device (10) according to at least one of the preceding claims, wherein the overall centre of gravity (S1a, S1b, S1c) of the weight side (G), the overall centre of gravity (S2a, S2b, S2c) of the useful load side (K) and the fastening point (V1) of the bearing arm (20) on the support foot (12) are essentially in a straight line, in particular in each position of the holding and movement device.

9. Holding and moving device (10) according to at least one of the preceding claims, wherein the centre of gravity (S1a, S1b, S1c) or overall centre of gravity (S1a, S1b, S1c) of the weight side (G) comprises the inherent weight (e) of the weight-side second pivot arm (40), the inherent weight (d) of the weight-side section (26) of the bearing arm (20) and/or at least one weight-side balance weight (28, 42, 44, 44'), and/or the centre of gravity (S2a, S2b, S2c) or overall centre of gravity (S2a, S2b, S2c) of the useful load side (K) comprises the inherent weight (b) of the useful load side first pivot arm (30), the inherent weight (a) of the useful load side section (24) of the bearing arm (20), the inherent weight of the holding device (32) for the useful load (36) and/or the inherent weight (c) of the useful load (36).

10. Holding and moving device (10) according to at least one of the preceding claims, wherein the second pivot arm (40) further includes a holding device for a balance weight (42, 44') for the useful load (36) and/or a holding device for a balance weight (44, 44') for the useful load side first pivot arm (30) and/or the useful load side bearing arm section (24).

11. Holding and moving device (10) according to at least one of the preceding claims, wherein the second pivot arm (40) has at least one balance weight (42, 44') predetermined as a function of the useful load.

12. Holding and moving device (10) according to claim 11, wherein the balance weight (44') predetermined as a function of the useful load can be secured in a variable position along the second pivot arm (40).

**13.** Holding and moving device (10) according to at least one of the preceding claims, wherein the second pivot arm (40) has at least one balance weight (44, 44') predetermined as a function of the inherent weight of the useful load side first pivot arm (30) and/or of the useful load side bearing arm section (24).

**14.** Holding and moving device (10) according to at least one of the preceding claims, wherein the support foot (12) is secured with respect to the respective pivot arm (30, 40) on a first longitudinal side of the bearing arm (20) and the first and the second pivot arm (30, 40) are secured on the respective opposite longitudinal side of the bearing arm (20).

**15.** Holding and moving device (10) according to at least one of the preceding claims, wherein the bearing arm (20) is formed from a plurality, in particular two, elements (24, 26) and the weight-side section (26) of the bearing arm (20) is formed relative to the support foot (12) on the opposite side as the useful load side section (24) of the bearing arm (20).

**16.** Holding and moving device (10) according to at least one of the preceding claims, wherein the orientation of the holding device (32) for the useful load (36) and/or of the holding device for the balance weight (42, 44') for the useful load (36) is controlled such that this balances the movement of the pivot arms (30, 40).

**17.** Holding and moving device (10) according to at least one of the preceding claims, wherein a centre of gravity and/or holding point (V2) for the useful load (36) and/or for the holding device for the useful load, a centre of gravity and/or holding point (V3) for a balance weight (42) for the useful load (36) and the fastening point (V1) of the bearing arm (20) on the support foot (12) and/or wherein a centre of gravity of the first pivot arm (30) and a centre of gravity of the second pivot arm (40) and a connecting point (V1) of the bearing arm (20) on the support foot (12) are essentially in a straight line.

**18.** Holding and moving device (10) according to at least one of the preceding claims, wherein the holding device (32) for the useful load (36) and/or the holding device for the balance weight (42, 44') for the useful load (36) is designed as a lateral, vertical and/or horizontal extension arm.

**19.** Holding and moving device (10) according to at least one of the preceding claims, wherein the pivot arms (30, 40) and/or the bearing arm (20) are connected relative to another movably via chain hoists, belts, wire ropes, electric motors and/or hydraulic rotary drives.

**20.** Holding and moving device (10) according to at least one of the preceding claims, wherein the useful load (36) is a camera, such as a photo and/or video camera.

**Revendications**

**1.** Dispositif de maintien et de déplacement (10) d'une charge utile (36), comprenant:

un pied de support (12);
un bras porteur (20), qui est fixé de manière pivotante sur le pied de support (12), de manière à former une section côté charge utile (24) et une section côté poids (26);
un premier bras pivotant (30), qui est relié du côté charge utile à la section côté charge utile (24) du bras porteur (20) et auquel une charge utile (36) et/ou un dispositif de maintien (32) pour une charge utile (36) peut être fixé ou est fixé; et
un second bras pivotant (40), qui est relié du côté du poids à la section côté poids (26) du bras porteur (20) et auquel au moins un poids d'équilibre (42, 44, 44') peut être fixé ou est fixé, dans lequel le bras porteur (20), le premier bras pivotant (30) et le second bras pivotant (40) sont reliés l'un à l'autre de telle sorte que l'orientation du premier et du second bras pivotant (30, 44, 44') peut être fixée ou est fixée, 40) soient essentiellement parallèles l'un à l'autre dans chaque position, **caractérisé en ce que** le centre de gravité (S1a, S1b, S1c) du côté du poids (G) avec ou sans poids d'équilibrage (42, 44, 44'), le centre de gravité (S2a, S2b, S2c) du côté de la charge utile (K) avec ou sans charge utile (36) et le point de fixation (V1) du bras porteur (20) sur le pied d'appui (12) sont essentiellement en ligne droite.

**2.** Dispositif de maintien et de déplacement (10) d'une charge utile (36), comprenant:

un pied de support (12) ; un bras porteur (20), qui est fixé de manière pivotante sur le pied de support (12), de manière à former une section côté charge utile (24) et une section côté poids (26);
un premier bras pivotant (30), qui est relié du côté charge utile à la section côté charge utile (24) du bras porteur (20) et auquel une charge utile (36) et/ou un dispositif de maintien (32) pour une charge utile (36) peut être attaché ou est attaché; et
un second bras pivotant (40), qui est relié du côté du poids à la section côté poids (26) du bras porteur (20) et auquel au moins un poids d'équilibrage (42, 44, 44') peut être fixé ou est fixé, dans lequel le bras porteur (20), le premier bras pivotant (30) et le second bras pivotant (40) sont reliés l'un à l'autre de telle sorte que l'orientation du premier et du second bras pivotant (30, 44, 44') peut être fixée ou est fixée, 40) soient essentiellement parallèles l'un à l'autre dans chaque position, **caractérisé par le fait que** le second bras pivotant côté poids (40) et/ou la section du bras porteur côté poids (26) sont conçus de manière à ce que le poids du premier bras pivotant côté charge utile (30) et/ou de la section du bras porteur côté charge utile (24) soit équilibré dans chaque position du dispositif de maintien et de déplacement (10).

3. Dispositif de maintien et de déplacement (10) selon la revendication 1 ou 2, dans lequel le rapport entre la distance (l) du point de connexion du premier bras pivotant (30) sur le bras porteur (20) et le point de fixation (V2) de la charge utile (36) ou du dispositif de maintien (32) sur le premier bras pivotant (30) et la distance (u) du point de fixation (V1) du bras porteur (20) sur le rapport entre la distance (u) du point de fixation (V1) du bras porteur (20) sur le pied de support (12) et le point de connexion du premier bras pivotant (30) sur le bras porteur (20) est essentiellement égal au rapport entre la distance (r) du point de connexion du deuxième bras pivotant (40) sur le bras porteur (20) et le centre de gravité et/ou le point d'attache (V3) de la masse d'équilibrage (42), 44') sur le deuxième bras pivotant (40) à la distance (t) du point de fixation (V1) du bras porteur (20) sur le pied d'appui (12) au point de connexion du deuxième bras pivotant (40) sur le bras porteur (20).

4. Dispositif de maintien et de déplacement (10) selon la revendication 1 ou 3, dans lequel le deuxième bras pivotant côté poids (40) et/ou la section du bras porteur côté poids (26) sont conçus de telle sorte que le poids du premier bras pivotant côté charge utile (30) et/ou de la section du bras porteur côté charge utile (24) est équilibré dans chaque position du dispositif de maintien et de déplacement (10).

5. Dispositif de maintien et de déplacement (10) selon la revendication 2, 3 ou 4, dans lequel le centre de gravité (S1a, S1b, S1c) du côté du poids (G), le centre de gravité (S2a, S2b, S2c) du côté de la charge utile (K) et le point de fixation (V1) du bras porteur (20) sur le pied de support (12) sont essentiellement en ligne droite.

6. Dispositif de maintien et de déplacement (10) selon au moins l'une des revendications précédentes, dans lequel la distance (l) du point de connexion du premier bras pivotant (30) sur le bras porteur (20) au point de fixation (V2) de la charge utile (36) ou du dispositif de maintien (32) sur le premier bras pivotant (30) et la distance (u) du point de fixation (V1) du bras porteur (20) sur le pied d'appui (12) au point de connexion du premier bras pivotant (30) sur le bras porteur (20) sont sensiblement égales. ou la distance (l) entre le point de fixation du premier bras pivotant (30) sur le bras porteur (20) et le point de fixation (V2) de la charge utile (36) ou du dispositif de maintien (32) sur le premier bras pivotant (30) est supérieure ou inférieure à la distance (u) entre le point de fixation (V1) du bras porteur (20) sur le pied d'appui (12) et le point de fixation du premier bras pivotant (30) sur le bras porteur (20).

7. Dispositif de maintien et de déplacement (10) selon au moins l'une des revendications précédentes, dans lequel la distance (r) du point de liaison du deuxième bras pivotant (40) sur le bras porteur (20) au centre de gravité et/ou au point de fixation (V3) de la masse d'équilibrage (42, 44') sur le deuxième bras pivotant (40) et la distance (t) du point de fixation (V1) du bras porteur (20) sur le pied de support (12) au point de connexion des deuxièmes bras pivotants (40) sur le bras porteur (20) sont essentiellement de longueur égale ou la distance (r) du point de connexion du deuxième bras pivotant (40) sur le bras porteur (20) au centre de gravité et/ou au point de fixation (V3) de la masse d'équilibrage (42, 44') sur le bras porteur (20) est essentiellement de longueur égale, 44') sur le deuxième bras pivotant (40) est supérieure ou inférieure à la distance (t) entre le point de fixation (V1) du bras porteur (20) sur le pied de support (12) et le point de connexion du deuxième bras pivotant (40) sur le bras porteur (20).

8. Dispositif de maintien et de déplacement (10) selon au moins l'une des revendications précédentes, dans lequel le centre de gravité global (S1a, S1b, S1c) du côté du poids (G), le centre de gravité global (S2a, S2b, S2c) du côté de la charge utile (K) et le point de fixation (V1) du bras porteur (20) sur le pied de support (12) sont sensiblement en ligne droite, en particulier dans chaque position du dispositif de maintien et de déplacement.

9. Dispositif de maintien et de déplacement (10) selon au moins l'une des revendications précédentes, dans lequel le centre de gravité (S1a, S1b, S1c) ou le centre de gravité global (S1a, S1b, S1c) du côté poids (G) comprend le poids propre (e) du deuxième bras pivotant (40) du côté poids, le poids propre (d) de la section (26) du bras porteur (20) du côté poids et/ou au moins une masse d'équilibrage (28, 42, 44) du côté poids, 44'), et/ou le centre de gravité (S2a, S2b, S2c) ou le centre de gravité global (S2a, S2b, S2c) du côté charge utile (K) comprend le poids propre (b) du premier bras pivotant côté charge utile (30), le poids propre (a) de la section côté charge utile (24) du bras porteur (20), le poids propre du dispositif de maintien (32) de la charge utile (36) et/ou le poids propre (c) de la charge utile (36).

**10.** Dispositif de maintien et de déplacement (10) selon au moins l'une des revendications précédentes, dans lequel le second bras pivotant (40) comprend en outre un dispositif de maintien d'un poids d'équilibre (42, 44') pour la charge utile (36) et/ou un dispositif de maintien d'un poids d'équilibre (44, 44') pour le premier bras pivotant (30) côté charge utile et/ou le tronçon de bras porteur (24) côté charge utile.

**11.** Dispositif de maintien et de déplacement (10) selon au moins l'une des revendications précédentes, dans lequel le deuxième bras pivotant (40) présente au moins un poids d'équilibrage (42, 44') prédéterminé en fonction de la charge utile.

**12.** Dispositif de maintien et de déplacement (10) selon la revendication 11, dans lequel le poids d'équilibre (44') prédéterminé en fonction de la charge utile peut être fixé dans une position variable le long du deuxième bras pivotant (40).

**13.** Dispositif de maintien et de déplacement (10) selon au moins l'une des revendications précédentes, dans lequel le deuxième bras pivotant (40) a au moins un poids d'équilibre (44, 44') prédéterminé en fonction du poids inhérent du premier bras pivotant côté charge utile (30) et/ou de la section du bras porteur côté charge utile (24).

**14.** Dispositif de maintien et de déplacement (10) selon au moins l'une des revendications précédentes, dans lequel le pied de support (12) est fixé par rapport au bras pivotant respectif (30, 40) sur un premier côté longitudinal du bras porteur (20) et le premier et le second bras pivotant (30, 40) sont fixés sur le côté longitudinal opposé respectif du bras porteur (20).

**15.** Dispositif de maintien et de déplacement (10) selon au moins l'une des revendications précédentes, dans lequel le bras porteur (20) est formé d'une pluralité, en particulier de deux, éléments (24, 26) et la section côté poids (26) du bras porteur (20) est formée par rapport au pied de support (12) du côté opposé à la section côté charge utile (24) du bras porteur (20).

**16.** Dispositif de maintien et de déplacement (10) selon au moins l'une des revendications précédentes, dans lequel l'orientation du dispositif de maintien (32) de la charge utile (36) et/ou du dispositif de maintien du poids d'équilibre (42, 44') de la charge utile (36) est contrôlée de manière à équilibrer le mouvement des bras pivotants (30, 40).

**17.** Dispositif de maintien et de déplacement (10) selon au moins l'une des revendications précédentes, dans lequel un centre de gravité et/ou un point de maintien (V2) de la charge utile (36) et/ou du dispositif de maintien de la charge utile, un centre de gravité et/ou un point de maintien (V3) d'un poids d'équilibre (42) de la charge utile (36) et le point de fixation (V1) du bras porteur (20) sur le pied de support (12) et/ou dans lequel un centre de gravité du premier bras pivotant (30) et un centre de gravité du second bras pivotant (40) et un point de raccordement (V1) du bras porteur (20) sur le pied de support (12) sont essentiellement en ligne droite.

**18.** Dispositif de maintien et de déplacement (10) selon au moins l'une des revendications précédentes, dans lequel le dispositif de maintien (32) de la charge utile (36) et/ou le dispositif de maintien du poids d'équilibre (42, 44') de la charge utile (36) est conçu comme un bras d'extension latéral, vertical et/ou horizontal.

**19.** Dispositif de maintien et de déplacement (10) selon au moins l'une des revendications précédentes, dans lequel les bras pivotants (30, 40) et/ou le bras porteur (20) sont reliés l'un à l'autre de manière mobile par des palans à chaîne, des courroies, des câbles métalliques, des moteurs électriques et/ou des entraînements hydrauliques rotatifs.

**20.** Dispositif de maintien et de déplacement (10) selon au moins l'une des revendications précédentes, dans lequel la charge utile (36) est un appareil photo, tel qu'une caméra photo et/ou vidéo.

**Fig. 1**

**Fig. 2**

**Fig. 3**

Fig. 3a

Fig. 3b

Fig. 3c

**Fig. 4a**

**Fig. 4b**

**Fig. 4c**

**Fig. 5**

**Fig. 6a**

**Fig. 6b**

**Fig. 6c**

**Fig. 7**

**Fig. 8**

**Fig. 9a**

30

V2

36

**Fig. 9b**

30

V2

32

36

**Fig. 9c**

24

30

36

V3

V1

V2

26

42

40

Auslage
Gegengewicht

Auslage
Gewichtsseite

Auslage
Nutzlastseite

Auslage
Nutzlast

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5192963 A
- EP 2391571 B1
- US 2548476 A
- US 5531412 A